# EUROPEAN PATENT SPECIFICATION

(11) **EP 3 540 467 B1**
(45) Date of publication and mention of the grant of the patent: **30.12.2020**
(21) Application number: 19161978.2
(22) Date of filing: 11.03.2019
(51) Int. Cl.: G01S 17/10, G01S 7/484, G01S 17/86, G01S 17/894, G01S 17/931

(54) **RANGE FINDING SYSTEM, RANGE FINDING METHOD, IN-VEHICLE DEVICE, AND VEHICLE**
ENTFERNUNGSMESSSYSTEM, ENTFERNUNGSBESTIMMUNGSVERFAHREN, FAHRZEUGINTERNE VORRICHTUNG UND FAHRZEUG
SYSTÈME DE RECHERCHE DE PORTÉE, PROCÉDÉ DE RECHERCHE DE PORTÉE, DISPOSITIF EMBARQUÉ ET VÉHICULE

(30) Priority: 13.03.2018 JP 2018045944
(43) Date of publication of application: 18.09.2019
(73) Proprietor: Ricoh Company, Ltd., Tokyo 143-8555 (JP)
(72) Inventor: SEKIGUCHI, Hiroyoshi, Tokyo, 143-8555 (JP); YOKOTA, Soichiro, Tokyo, 143-8555 (JP); SAISHO, Kenichiroh, Tokyo, 143-8555 (JP)
(74) Representative: J A Kemp LLP

(56) References cited:
- EP-A1- 3 276 576
- EP-A1- 3 279 691
- US-A1- 2016 259 038
- JAN FISCHER ET AL: "Combination of Time-of-Flight depth and stereo using semiglobal optimization", ROBOTICS AND AUTOMATION (ICRA), 2011 IEEE INTERNATIONAL CONFERENCE ON, IEEE, 9 May 2011 (2011-05-09), pages 3548-3553, XP032033860, DOI: 10.1109/ICRA.2011.5979999 ISBN: 978-1-61284-386-5
- NAIR RAHUL ET AL: "A Survey on Time-of-Flight Stereo Fusion", 11 September 2013 (2013-09-11), INTELLIGENT VIRTUAL AGENT. IVA 2015. LNCS; [LECTURE NOTES IN COMPUTER SCIENCE; LECT.NOTES COMPUTER], SPRINGER, BERLIN, HEIDELBERG, PAGE(S) 105 - 127, XP047269358, ISBN: 978-3-642-17318-9 * paragraphs [03.1], [03.2] *

## Description

### BACKGROUND OF THE DISCLOSURE

### 1. Field of the Disclosure

The disclosures discussed herein relate to a range finding system, a range finding method, an in-vehicle device, and a vehicle.

### 2. Description of the Related Art

Feature point block matching and semi-global-matching (SGM) propagation are well known algorithms for stereo camera disparity calculation. These algorithms are used for calculating a cost for every disparity to searching for feature points of two horizontally arranged images (i.e., left and right images), which includes detecting a disparity that provides the minimum cost in disparity search space, and calculating a distance corresponding to each pixel based on a correspondence formula (Z = BF/D) between a disparity D and a distance Z, where B represents a baseline length, and F represents a focal length.

However, such a distance calculated from a disparity determined by these disparity algorithms tends to fail to secure a range resolution in a far region, and the variability (dispersion) of the range values tends to increase.

In in-vehicle industries, as represented by automatic driving, range-finding performance needs to be improved at a long range. In the related art (e.g., Patent Document 1), attempts have thus been made to integrate measurement results (this integration may be called "fusion") of LiDAR (Light Detection and Ranging, Laser Imaging Detection and Ranging) and measurement results of a stereo camera; LiDAR has a low spatial resolution with a high range resolution, and the stereo camera has a high spatial resolution with a low range resolution at a long distance. Patent Document 1 discloses a disparity calculation system. In this disparity calculation system, range information of LiDAR is associated with pixels of a captured image in advance, and disparities of the pixels of the captured image are calculated by using values obtained based on the range information associated with the pixels so as to generate a disparity image. Such fusion improves outputting of three-dimensional high-resolution ranging results, lowers dispersion in object range-finding values, advances detection of discontinuous surfaces, achieves downsizing, environmental robustness, and the like.

EP 3 276 576 A1 and US 2016/259038 A1 disclose range finding systems forming part of the background art and outside the scope of the present invention.

### [Related-Art Document]

### [Patent Document]

[Patent Document 1] Japanese Unexamined Patent Publication No. 2015-143679

### SUMMARY OF THE DISCLOSURE

### TECHNICAL PROBLEM

However, with such conventional techniques, it is difficult to downsize a range finding system in which a stereo camera and LiDAR are both installed for performing fusion. First, in LiDAR, the greater the light reception signal obtained by reflecting a light emission pulse by the object, the smaller the noise included in the light reception signal. Hence, large numbers and large sizes of light emission elements or light reception elements are preferable to be installed in LiDAR. However, in view of installation of the light emission elements or light reception elements in certain types of equipment such as a vehicle, the number of light emission elements or the number of light reception elements to be installed in equipment such as a vehicle may be limited. In addition, large light emission elements or large light reception elements are not physically installable in equipment such as a vehicle in the first place. When there is a limitation in the size or the number of light reception elements, a light reception signal will be weak; thus a level of the light reception signal may become relatively closer to a noise level (S/N ratio becomes small). A distance obtained from such the light reception signal thus tends to exhibit low accuracy.

When a light emission pulse is shortened, the accuracy in measuring a distance is improved; however, when a light emission pulse is too short, A/D conversion of a light reception signal requires a high-rate sampling frequency. This makes it technically difficult to manufacture a range finding system; or even if it is possible to manufacture a range finding system, the manufacturing cost will increase.

In addition, for stereo cameras, the base length of a downsized stereo camera is short, range resolution at a long range becomes low, and time and labor required for calibration will significantly increase. Thus, the conventional range finding systems appear to have difficulty in downsizing, despite a demand for downsizing of the range finding systems.

In light of the above issues, it is an object of the present invention to provide a range finding system that can be reduced in size.

### SOLUTION TO PROBLEM

According to an aspect of an embodiment,
a range finding system is provided as defined by the appended claims.

### [Advantageous Effects of Invention]

The present invention is to provide a range finding system that can be reduced in size.

### BRIEF DESCRIPTION OF THE DRAWINGS

FIG. 1 is an example of a graph schematically illustrating a light emission pulse and a light reception signal of LiDAR;
FIGS. 2A and 2B are graphs schematically illustrating a light emission pulse and a light reception signal of LiDAR in a case of return light intensity being weak;
FIGS. 3A to 3C are diagrams schematically illustrating a light emission pulse and a light reception signal with relatively wide FWHM;
FIGS. 4A and 4B are graphs illustrating an example of a distance obtained when a general disparity space is used;
FIG. 5 is a diagram illustrating an example of a related-art fusion method of range information of LiDAR and a depth map of a stereo camera;
FIGS. 6A to 6B are diagrams illustrating a fusion method of a present embodiment;
FIG. 7 is a diagram illustrating an example of a range finding system installed on an automobile which is an example of a moving body;
FIGS. 8A and 8B are diagrams illustrating an example of a laser light emission range by a laser radar range finder;
FIG. 9 is an external diagram of a range finding system installed on a vehicle at the front of a rearview mirror;
FIGS. 10A and 10B are diagrams illustrating an imaging range of a stereo image by a stereo image operation unit;
FIGS. 11A to 11C are diagrams illustrating a relationship between a laser light emission position by a laser radar range finder and a pixel position of a stereo image (reference image) captured by a stereo image operation unit;
FIG. 12 is a functional configuration diagram illustrating an example of a laser radar range finder;
FIGS. 13A and 13B are tables illustrating a relationship between a sampling period and range resolution;
FIG. 14 is an example of a configuration diagram of a range finding system;
FIG. 15 is a diagram illustrating an example of calculating SAD (Sum of Absolute Differences) as a cost of a target pixel p = (Px3,Py5) in a reference image captured by a right camera and a comparative image captured by a left camera;
FIGS. 16A and 16B are graphs illustrating an example of SAD for each disparity of a certain target pixel;
FIG. 17 is a diagram schematically illustrating a process of calculating a propagation cost using an SGM propagation method;
FIG. 18 is a flowchart illustrating an example of an operation procedure of the range finding system;
FIG. 19 is a diagram illustrating an example of a stereo matching cost;
FIGS. 20A to 20C are graphs each illustrating a LiDAR cost calculation method;
FIGS. 21A to 21C indicate graphs schematically illustrating an example of fusion of stereo matching cost and LiDAR cost;
FIG. 22 is a diagram illustrating an example of a method of calculating an energy cost;
FIG. 23 is a diagram illustrating an example of a method of calculating an energy cost;
FIG. 24 is a diagram illustrating an example of a method of calculating a distance that minimizes energy cost;
FIGS. 25A and 25B are supplemental diagrams supplementing range resolution of Z space;
FIGS. 26A to 26C are graphs illustrating examples of range resolution between a short range side and a long range side; and
FIG. 27 is a diagram illustrating an example of an effect of a range measurement result by a range measuring system.

### DETAILED DESCRIPTION OF THE PREFERRED EMBODIMENTS

In order to let a person skilled in the art better understand the present disclosure, hereinafter, the embodiments of the present disclosure will be concretely described with reference to the drawings. However, it should be noted that the same symbols, which are in the specification and the drawings, stand for constructional elements having basically the same function and structure, and the repetition of the explanations to the constructional elements is omitted.

The following illustrates a range finding system and a range-finding method performed by the range finding system as an example of a mode for carrying out by the present invention.

### <Supplemental Explanation for Downsizing of LiDAR>

Signals received by a downsized LiDAR (Light Detection and Ranging, Laser Imaging Detection and Ranging) are weak, which may result in a small S/N ratio of the light reception signal, and low accuracy in distance measurement. In order to improve the distance measurement accuracy, shortening of the pulse width of a light emission pulse may be suggested. However, the reduced pulse width of an emission pulse may have some disadvantages as follows.

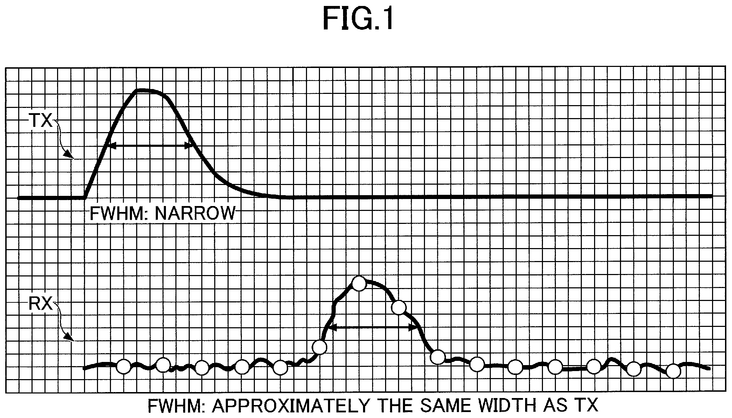

FIG. 1 is an example of a diagram schematically illustrating a light emission pulse TX and a light reception signal RX of LiDAR. A range finding system having a LiDAR measures a distance based on the time between the emission of an emission pulse TX of light from LiDAR and the reception of a reception signal being returned. In practice, LiDAR starts sampling immediately after emission of light emission pulse TX because a reception time of a light reception signal RX is unknown. In FIG. 1, white circles of the light reception signal RX indicate samples of the light reception signal RX.

FIG. 1 is a diagram illustrating a light reception signal RX that exhibits sufficient return light intensity of a light reception signal RX with respect to a shortened emission pulse TX. The return light intensity indicates intensity with respect to a pulse of a light reception signal RX. FWHM (Full Width at Half Maximum) of the light reception signal RX, which results from an emission pulse TX being returned after having reflected off a vehicle, is approximately the same as the FWHM of the light emission pulse TX. In this case, the Doppler effect needs not be considered as the speed of a vehicle with respect to light is stationary.

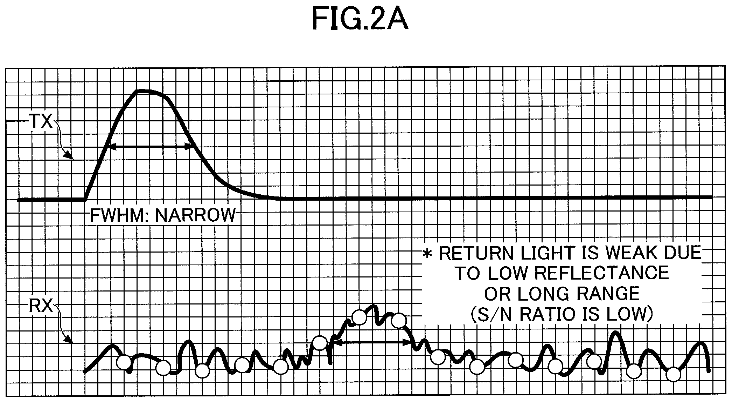

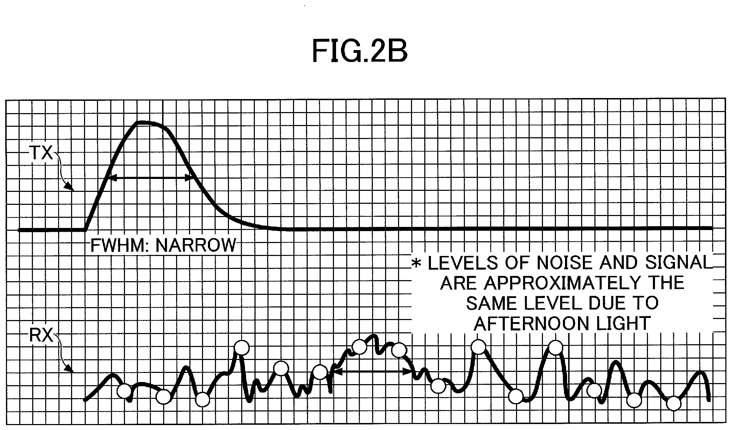

FIGS. 2A and 2B are graphs schematically illustrating examples of a light emission pulse TX and a light reception signal RX of LiDAR in a case of return light intensity of the light reception signal RX being weak. The weak return light intensity of the reception signal RX illustrated in FIG. 2A results from low reflectance of a target object, or results from a target object being present at a long range. In FIG. 2A, the peak of the light reception signal RX becomes small, and the return light intensity of the light reception signal RX becomes small. In such a case, an S/N ratio may decrease, and the accuracy of distance measurement may be reduced.

Further, in a case of a level of the reception signal being approximately the same as a level of noise due to effect of late afternoon sunlight (because vehicles more directly receive sunlight in the late afternoon due to the height of the sun) and the like, identification of the light reception signal RX is more difficult despite the high return light intensity of the light reception signal RX. In FIG. 2B, since the light reception signal RX includes a signal of reflection of the light emission pulse TX and noise due to late afternoon sunlight or the like, peaks equal to or larger than the reflection of the light emission pulse TX are obtained. With such a waveform, the accuracy of time from the output of an emission pulse TX of light to the reception of a reception signal RX may decrease.

### <LIGHT EMISSION PULSE TX AND LIGHT RECEPTION SIGNAL RX OF LIDAR OF THE PRESENT EMBODIMENT>

A waveform of such a light reception signal RX as illustrated in FIGS. 2A and 2B may be easily restored by shortening a sampling period of the light reception signal RX. However, an operation load and manufacturing difficulty of such a LiDAR system would increase, which results in an increase in manufacturing cost despite the manufacturing of such a LiDAR system being possible.

In order to handle such adverse effects, use of a light emission pulse TX with a relatively wide FWHM may be considered. The light emission pulse TX with a relatively wide FWHM increases a FWHM of the light reception signal RX. Thus, the sampling frequency of A/D conversion need not be so high (fast). That is, a light reception signal RX will be restored with a relatively long sampling period. As a result, a relatively inexpensive LiDAR may be used, as compared with a costly LiDAR with a narrow FWHM.

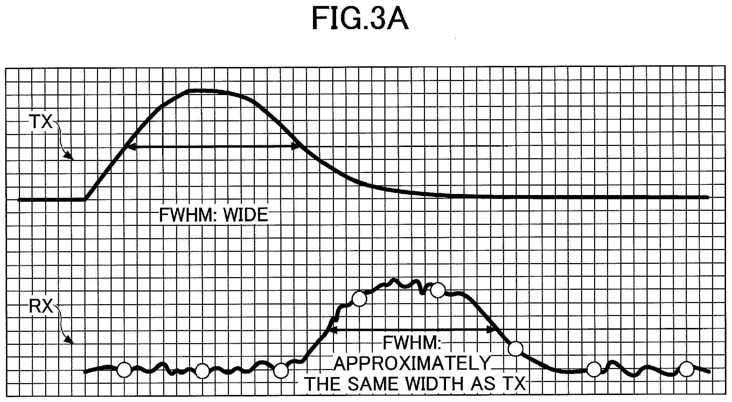

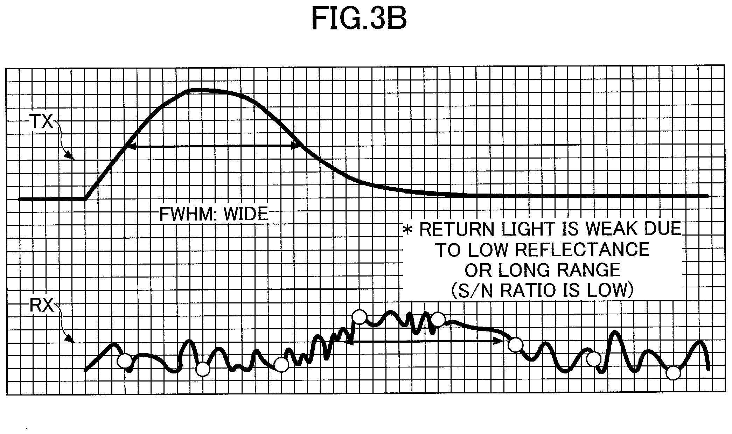

FIGS. 3A to 3C are diagrams each schematically illustrating a light emission pulse TX with a relatively wide FWHM and a light reception signal RX. First, in FIG. 3A, since return light intensity of the light reception signal RX is large, a distance is calculated with high accuracy. FIG. 3B is a diagram schematically illustrating a light emission pulse TX and a light reception signal RX of LiDAR when the return light intensity is weak due to low reflectance of a target object or a target object being disposed at a long range. In FIG. 3B, the intensity of the light reception signal RX is lower than the intensity of the light reception signal RX in FIG. 3A. However, a waveform of the light reception signal RX will be restored with relative ease because the FWHM of a light emission pulse TX is wide. Thus, the accuracy of distance measurement will not deteriorate easily.

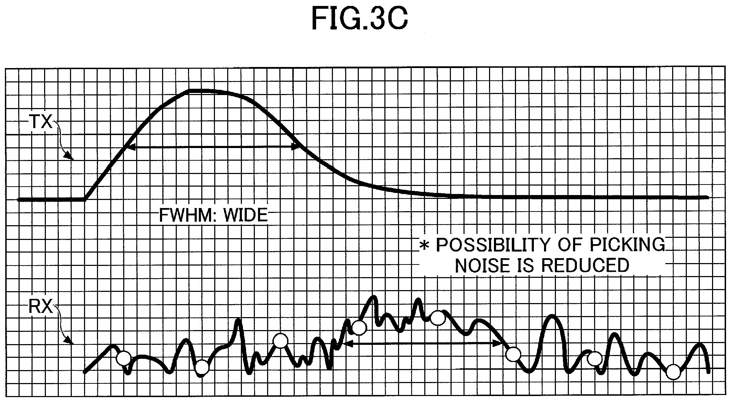

FIG. 3C is a diagram schematically illustrating a light emission pulse TX and a light reception signal RX of LiDAR with a high level of noise due to the effect of the late afternoon sunlight, and the like. In FIG. 3C, peaks other than the peak of the light reception signal RX are obtained due to the effect of noise. However, since the FWHM of a light emission pulse TX is wide, noise indicating a peak unrelated to the light reception signal would not be sampled, and the accuracy of distance measurement would thus not be lowered appreciably.

As illustrated in FIGS. 3B and 3C, one of the characteristics of the range finding system according to present embodiment is that a sampling period is shorter than a width of the light emission pulse TX. In the range finding system according to the present embodiment, at least one sample of the light reception signal RX is obtained within the width of the light emission pulse TX, and preferably three or more samples of the light reception signal RX are obtained within the width of the light emission pulse TX. In the range finding system according to the present embodiment, since the wide pulse width of the light reception signal RX is obtained, limitations affecting the number of or the size of light reception elements are reduced. As a result, the range finding system may be easily downsized.

Further, in the range finding system of the present embodiment, since the wide pulse width of the light reception signal RX is obtained, the sampling frequency (rate) of A/D conversion need not be so high (fast). The manufacturing cost will not be increased. Since the sampling frequency (rate) is not so high (fast), the range resolution may be sparse, and an operation load may be lowered at the time of a range operation.

Furthermore, when a light emission pulse and a light reception signal are both wide, the sampling frequency of A/D conversion need not be so high. Thus, even when a noise level and a signal level are approximately the same, a noise level signal will not be sampled.

### DEFINITIONS OF TERMS

TOF (Time Of Flight) scheme is a method of measuring a distance in accordance with an elapsed time from transmission of a signal to reception of a returned signal.

Sampling means to extract a portion from continuous data. Sampling in the present embodiment further includes A/D conversion of the extracted portion.

Cost is an index of selectability of a distance (or disparity) with respect to which the cost is calculated.

### LIDAR AND STEREO CAMERA FUSION

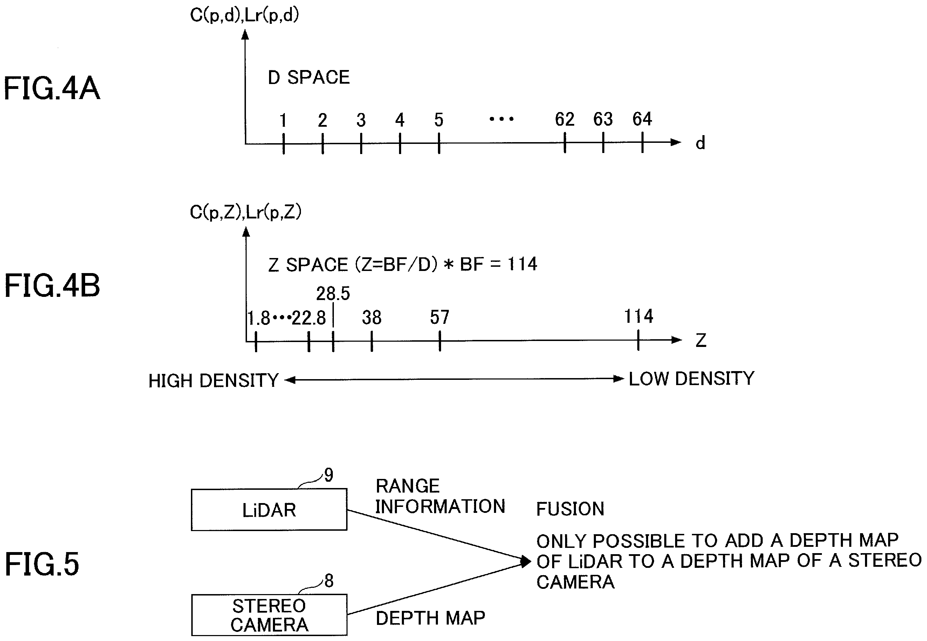

FIGS. 4A and 4B are graphs illustrating an example of a distance Z obtained when a general binocular disparity space is used. FIG. 4A illustrates cost C(p,d) and propagation cost Lᵣ(p,Z) obtained by block matching and SGM propagation method. The horizontal axis is a shift amount with disparity d as a unit. In FIG. 4A, the search range is set to 64 pixels. In FIG. 4A, p is a target pixel, and d is a shift amount (search disparity) of a reference image and a comparative image. The smallest cost C(p,d) in the search range of 64 pixels or the propagation cost Lᵣ(p,Z) is adopted as a disparity (integer disparity) of the target pixel p.

FIG. 4B illustrates a cost C(p,d) in Z space or propagation cost Lᵣ(p,Z). The distance Z is obtained from a disparity d in FIG. 4A by the following formula (1). $Z = BF / d$ (1) Note that B represents a distance between optical axes of the left and right cameras in the stereo camera, and F represents a focal length of the left and right cameras. As illustrated in FIG. 4B, in Z space, sparse vs. dense areas are included in distance Z at which a cost C(p,d) or a propagation cost Lᵣ(p,Z) is obtained. This is because the distance Z is inversely proportional to d as d is included in the denominator of the formula (1) for calculating a distance Z, and the distance Z greatly changes when d is close to 0.

Thus, performing general block matching may become equivalent to performing sparse cost propagation at a long range, making it difficult to obtain high accuracy at a long range.

FIG. 5 is a diagram illustrating an example of a conventional fusion method of range information of LiDAR 9 and a depth map of a stereo camera 8. In a conventionally used fusion method, range information measured by the LiDAR 9 is added after the stereo camera 8 outputs a depth map by block matching or the like. In this conventional fusion method, as illustrated in FIGS. 4A and 4B, many errors are included in a depth map of the stereo camera 8. Thus, even if range information of LiDAR is added to the depth map of the stereo camera 8, there is a limitation in improving the accuracy of distance.

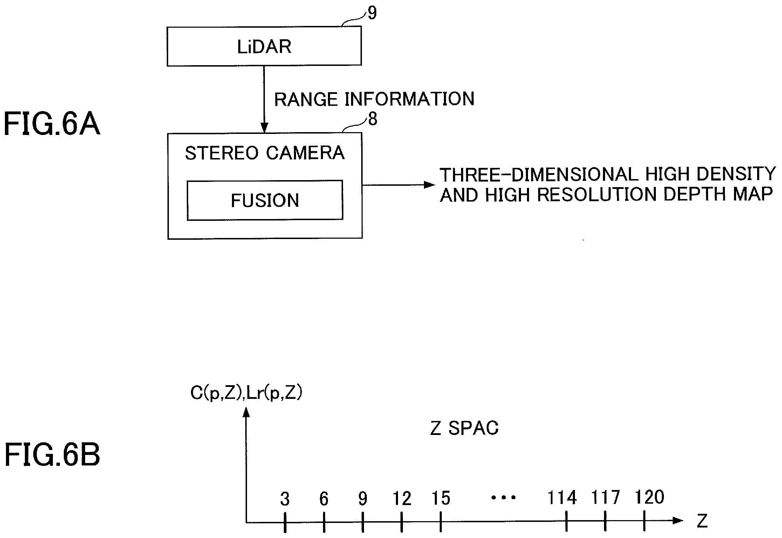

In the present embodiment, as illustrated in FIGS. 6A and 6B, the stereo camera 8 fuses the range information measured by the LiDAR 9 before outputting of a depth map by block matching or the like. FIG. 6A represents a diagram illustrating an example of a fusion method according to the present embodiment for fusing range information of LiDAR 9 and a depth map of a stereo camera 8. The stereo camera 8 fuses range information output by the LiDAR 9 and the cost C(p,d) before outputting of a depth map.

As illustrated in FIG. 6B, the stereo camera 8 calculates the cost C(p,Z) in Z space for this fusion. FIG. 6B illustrates examples of a cost C(p,Z) and a propagation cost Lᵣ(p,Z) in Z space. Since the costs obtained by block matching and the like are fused in Z space, the range finding system interpolates the costs in Z space so as to reduce the imbalance in sparseness and density of distance. Then, the cost C(p,Z) calculated by the stereo camera 8 and the cost detected by LiDAR 8 in this Z space are fused.

Thus, the distance Z with the smallest cost may be specified in Z space, and a depth map having a high range resolution may be obtained at both near (short) and far (long) ranges. Further, since a depth map originally has a high spatial resolution, a high-density and high-resolution depth map may be obtained.

As described above, the range finding system 100 according to the present embodiment fuses the range information measured by the LiDAR in Z space before the stereo camera outputs a depth map by block matching or the like. Accordingly, it is possible to provide a high-density and high-resolution depth map.

### APPLIED EXAMPLE OF RANGE FINDING SYSTEM

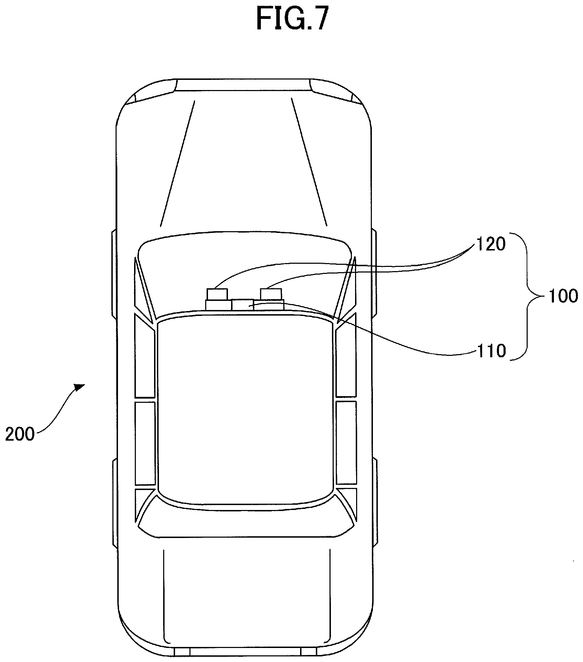

An applied example of the range finding system 100 will be described with reference to FIG. 7. FIG. 7 is a diagram illustrating an example of a range finding system 100 installed on an automobile 200 which is an example of a moving body. In FIG. 7, the range finding system 100 is set at the center position inside the windshield of the automobile 200. The range finding system 100 includes a laser radar range finder 110 and a stereo image operation unit 120. Both of the laser radar range finder 110 and the stereo image operation unit 120 are installed such that a forward landscape of the automobile 100 is set to be a distance finding range. The laser radar range finder 110 is disposed between the stereo cameras (two image capturing units) (preferably at the center) of the stereo image operation unit 120.

The laser radar range finder 110 has approximately the same function as that of the LiDAR. In the present embodiment, the laser radar range finder 110 and LiDAR are not distinguished from each other unless otherwise noted. The laser radar range finder 110 uses a laser diode to emit a pulse of light outside the visible spectrum and measures the time from emission to returning of the pulse to calculate a distance. Such a distance calculation method is called a TOF scheme. The reflected direction and distance of a pulse at a certain moment are recorded as a point in a 3D map where the laser radar range finder 110 is located at the center of the map.

### LASER EMISSION RANGE OF LASER RADAR RANGE FINDER

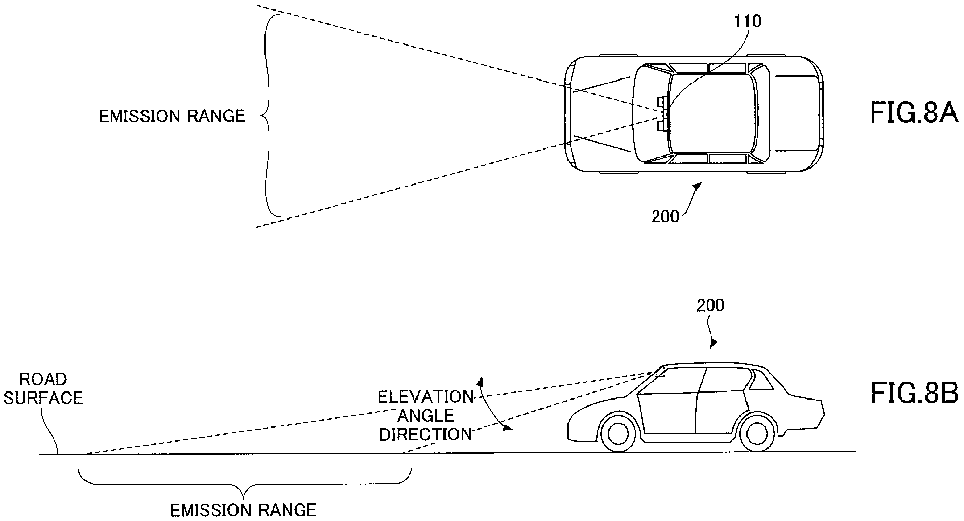

FIG. 8A and 8B are diagrams illustrating an example of a laser emission range by a laser radar range finder 110. FIG. 8A represents a top view of an automobile 200 as viewed from the top, and FIG. 8B represents a side view of the automobile 200 as viewed from the side.

As illustrated in FIG. 8A, the laser radar range finder 110 emits laser light while horizontally scanning a predetermined range (transverse direction emission range) of a forward landscape in front of the automobile 200 in a traveling direction. Note that the laser light may be considered as light or an electromagnetic wave.

Further, as illustrated in FIG. 8B, the laser radar range finder 110 emits laser light toward a predetermined range in a forward landscape in front of the automobile 200 in a traveling direction. How far the laser reaches may depend on the output power of the laser radar range finder 110; however, the laser can be measured within a range of approximately several hundred meters. The detection range in a close region may be detected from less than 1 meter; however, there is in general little need for finding a distance in such a close region. Hence, a distance detection range for detecting a distance may be set as required.

The laser radar range finder 110 is configured to scan in a horizontal direction while rotating an emission direction of the laser light in an elevation angle direction. Thus, it is possible to emit laser light in an emission range from near to far with reference to the installation position of the laser radar range finder 110.

### SIZE OF RANGE FINDING SYSTEM

For example, it is preferable that the size of the range finding system 100 installed on a vehicle be as small as possible. The installation position of the stereo camera 8 is limited because the stereo camera 8 needs to image a forward landscape in front of the vehicle. In general passenger cars, a stereo camera is often installed in the vehicle interior, and is installed so as not to interfere with occupant members in a limited space. For example, when a stereo camera is installed on the windshield in front of the rearview mirror, the size of the stereo camera may preferably be a size not to interfere with the driver's consciousness of seeing and operating the rearview mirror.

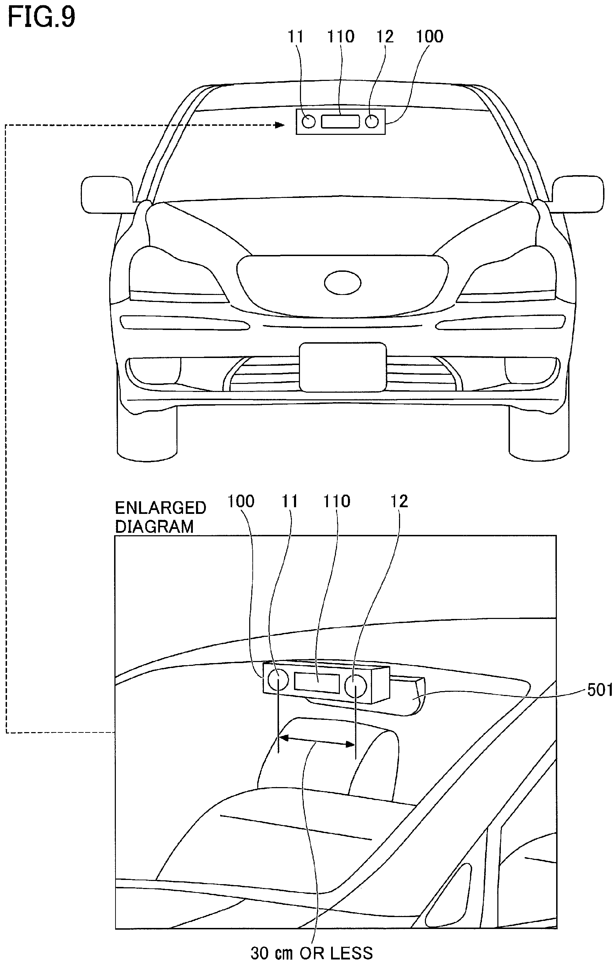

FIG. 9 is an external diagram of a range finding system 100 installed on a vehicle in front of a rearview mirror 501. The range finding system 100 is installed at the center in the vehicle width direction and on a vehicle ceiling between the rearview mirror 501 and the windshield. The laser radar range finder 110 is disposed between the right camera and the left camera of the stereo camera 8. That is, the right camera, the left camera, and the laser radar range finder 110 are arranged on a straight line. Since the laser radar range finder 110 and the stereo image operation unit 120 are stored in one casing in this manner, the number of assembling steps may be reduced.

In order for a driver not to be conscious of the range finding system 100, the width of the range finding system 100 is preferably narrower than the width of the rearview mirror 501. The size of the rearview mirror 501 varies; however, when a general rearview mirror is 30 cm, for example, the width of the range finding system 100 is preferably 30 cm or less.

As configuration having the lower limit of the width of the range finding system 100, the laser radar range finder 110 disposed between the right camera and the left camera may be given. In this configuration, the width of the range finding system 100 needs to be greater than the width of the laser radar range finder 110. Thus, the width of the range finding system 100 is as follows.

### WIDTH OF LASER RADAR RANGE FINDER 110 < WIDTH OF RANGE FINDING SYSTEM ≤ 30 cm

Although the width of the laser radar range finder 110 varies depending on the design, the manufacturing technique, the accuracy required, etc., the laser radar range finder 110 needs to have at least a width of approximately 4 to 5 cm or more. Thus, the width of the range finding system 100 is as follows.
4.5 cm ≤ the width of the range finding system 100 ≤ 30 cm
Note that when the baseline length of the stereo camera is too short, the range resolution in the long distance becomes sparse (range resolution is also affected by the pixel pitch and the focal length, so it is not determined by any single generalization). For example, if the baseline length of a stereo camera that can obtain preferable performance is 8 cm, the width of the range finding system 100 also exceeds this length. Thus, the width of the range finding system 100 is as follows.
8 cm ≤ the width of the range finding system 100 ≤ 30 cm
In this manner, the range finding system 100 of the present embodiment may be provided with a size which is much smaller than the conventional system.

### IMAGING RANGE OF STEREO IMAGE OPERATION UNIT

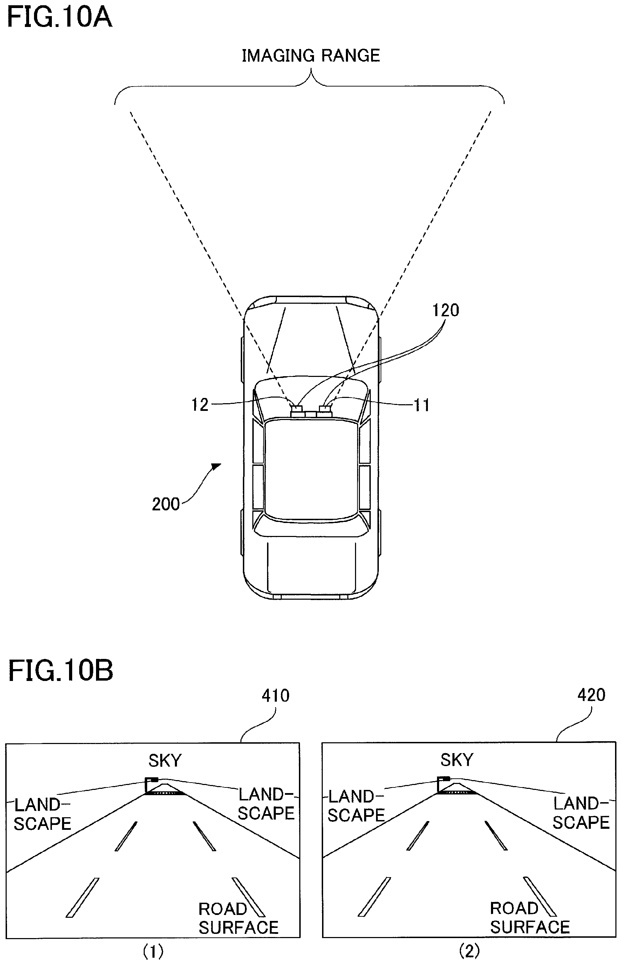

FIGS. 10A and 10B are diagrams illustrating an imaging range of a stereo image by a stereo image operation unit 120. FIG. 10A represents a top view of the automobile 200. The stereo image operation unit 120 includes two imaging devices (cameras) that are each installed with an optical axis directed to a forward side in a traveling direction of the automobile 200, and that capture an image in a predetermined range in the traveling direction. The emission range of the laser light at least partially overlaps the imaging range of the stereo camera 8.

In FIG. 10B, (1) and (2) indicate a reference image (image data of a right camera) and a comparative image (image data of a left camera), respectively, imaged by the stereo camera 8. The right camera 11 and the left camera 12 are installed horizontally with a predetermined interval therebetween. The reference image and the comparative image have overlapping portions, but the position of the object in the captured image will be shifted in the left or right direction.

The stereo image operation unit 120 generates and outputs a depth map by calculating a shift amount (which is a disparity) between each object of the reference image and a corresponding object of the comparative image.

### RELATIONSHIP BETWEEN EMISSION POSITION OF LASER LIGHT AND PIXEL POSITION OF STEREO IMAGE

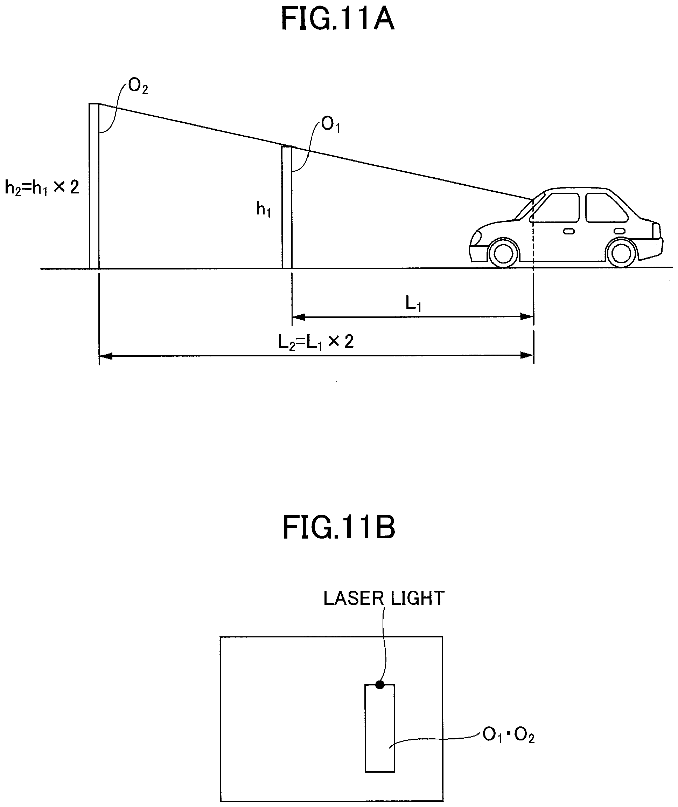

Next, with reference to FIGS. 11A to 11C, a relationship between an emission position of laser light by the laser radar range finder 110 and a pixel position of a stereo image (reference image) captured by the stereo image operation unit 120 will be described. FIG. 11A represents a diagram illustrating an example of a relationship between an emission position of laser light and a pixel position of the stereo image (reference image).

An emission direction of laser by the laser radar range finder 110 and a pixel position of the reference image may be associated in advance. FIG. 11A represents a side diagram illustrating two objects O₁ and O₂ viewed from a lateral side, and FIG. 11B represents a diagram illustrating an example of a reference image obtained by imaging the objects O₁ and O₂. Since the objects O₁ and O₂ are disposed on a straight line with respect to the optical axis of the laser radar range finder 110 and the right camera 11, images are captured in an overlapping manner.

It is presumed that the height h2 of the object O₂ is exactly twice the height h1 of the object O₁, and the distance L₂ of the object O₂ from the automobile 200 is exactly twice the distance L₁ of the object O₁ from the automobile 200. Since the sizes and distances of the objects O₁ and O₂ are proportional to each other, the objects O₁ and O₂ are displayed in the same size in the image data, and the objects O₁ and O₂ are displayed in an overlapped manner based on the positional relationship of the objects O₁ and O₂ with respect to the automobile 200. Hence, in a case where the laser light passes through the upper ends of the objects O₁ and O₂, the laser light should appear at the respective upper ends of the objects O₁ and O₂ in the reference image captured by the stereo image operation unit 120 (laser light will not actually appear, since the laser light is not visible light). As described above, since an emission direction of the laser light and a pixel position of the reference image have a one-to-one relationship regardless of the distance to the object, it is possible to associate an emission direction of the laser light and a pixel position of the reference image in advance.

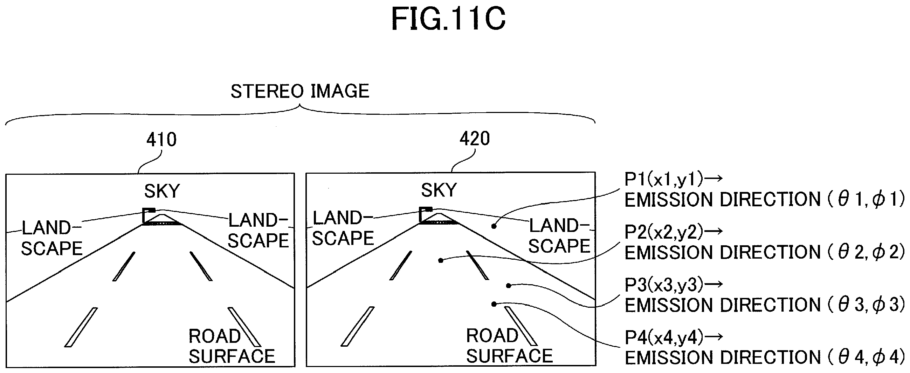

FIG. 11C illustrates range information corresponding to pixels P1 to P4 of the reference image. For example, a pixel of P1 (x1, y1) corresponds to an emission direction of a horizontal direction θ1 and an elevation angle ϕ1, a pixel of P2 (x2, y2) corresponds to an emission direction of a horizontal direction θ2 and an elevation angle ϕ2, a pixel of P3 (x3, y3) correspond to an emission direction of a horizontal direction θ3 and an elevation angle ϕ3, and a pixel of P4 (x4, y4) correspond to an emission direction of a horizontal direction θ4 and an elevation angle ϕ4.

When an emission direction and range information are output from the laser radar range finder 110, the stereo image operation unit 120 is enabled to associate the measured range information with pixels.

### FUNCTIONAL CONFIGURATION OF LASER RADAR RANGE FINDER

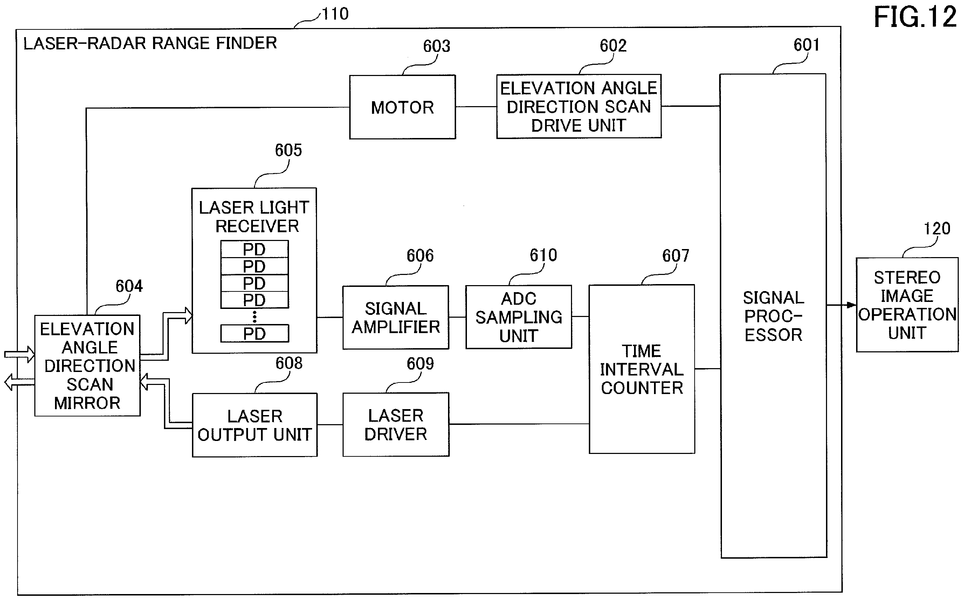

Next, FIG. 12 is a functional configuration diagram illustrating an example of a laser radar range finder 110. The laser radar range finder 110 includes a signal processor 601, an elevation angle direction scan drive unit 602, a motor 603, an elevation angle direction scan mirror 604, a laser light receiver 605, a signal amplifier 606, a time interval counter 607, a laser output unit 608, a laser driver 609, and an ADC sampling unit 610.

The elevation angle scan drive unit 602 drives the motor 603 for rotating the elevation angle direction scan mirror 604 in an elevation angle direction based on an instruction from the signal processor 601. As a result, the elevation angle direction scan mirror 604 rotates in the elevation angle direction.

The laser driver 609 is driven based on an instruction from the signal processor 601, and laser light is output from the laser output unit 608. The output timing of laser light is temporarily retained in the time interval counter 607. The laser light output from the laser output unit 608, which is output to the outside via the elevation angle direction scan mirror 604, is emitted in a predetermined emission range.

The laser light output to the outside is reflected by an object in the emission direction, and the reflected light is received by the laser light receiver 605 via the elevation angle direction scan mirror 604. The laser light receiver 605 has a plurality of photodetectors (PD: Photo Detectors) arranged in a vertical direction, and the laser light is received by one of the photodetectors and converted into an electric signal.

The converted electric signal that is amplified by the signal amplifier 606 is input to the ADC sampling unit 610. Upon laser light being output from the signal processor 601, the ADC sampling unit 610 starts sampling (A/D conversion) of an electric signal (light reception signal RX) at the sampling period instructed from the signal processor 601 in response to an instruction from the signal processor 601. The A/D converted light reception signal RX is input to the time interval counter 607.

The time interval counter 607 calculates a time interval based on output timing of the laser light output from the laser output unit 608 and light reception timing of the light reception signal RX sampled by the ADC sampling unit 610.

The time interval calculated by the time interval counter 607 is converted into range information by the signal processor 601, and the range information is output to the stereo image operation unit 120 together with information indicating the emission direction.

### SAMPLING PERIOD OF ADC SAMPLING UNIT

The range finding system 100 of the present embodiment is characterized in that the sampling period is shorter than the width of the light emission pulse TX; however, when the sampling period is too short, the operating load increases, and when the sampling period is long, the range resolution becomes sparse, which results in a decrease in the accuracy of a distance from an object. It is preferable to appropriately set a sampling period with respect to the width of the light emission pulse TX.

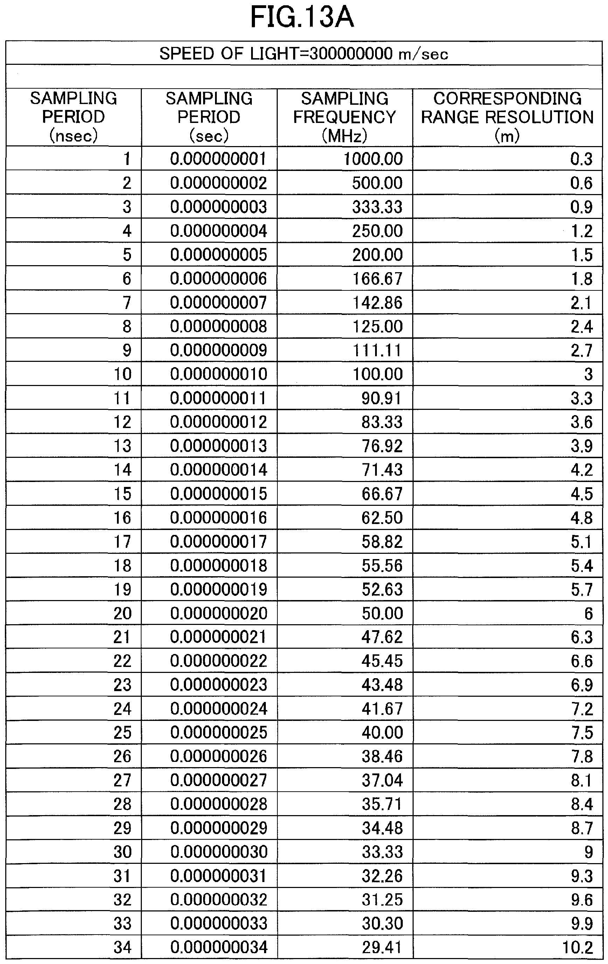

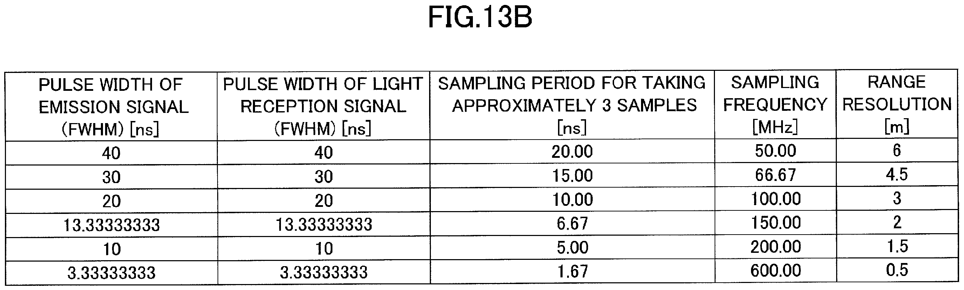

FIGS. 13A and 13B are tables illustrating a relationship between a sampling period and range resolution. FIG. 13A represents a table illustrating an example of calculating range resolution corresponding to a sampling period. In FIG. 13A, the sampling period, the sampling frequency, and the range resolution are associated with one another. For example, even if the sampling period is 1 nsec, a distance can only be measured with range resolution of 0.3 m when calculated with respect to the speed of light. Conversely, when the sampling period is 34 nsec, range resolution becomes 10.2 m when calculated with respect to the speed of light.

Levels of range resolution required may depend on the situation; however, since the stereo image operation unit 120 can measure a distance with a high density range resolution at a short range, it is preferable to have a practical range resolution at a long range. For example, in some cases, range resolution of 10 m may be sufficient with respect to an object located 100 m ahead of a vehicle; however, in some other cases, even with respect to the same object being located 100 m ahead of a vehicle, range resolution of approximately 3 m may be required.

FIG. 13B is an example of a table illustrating correspondence between widths and range resolutions of light emission pulses TX in some possible cases. In the example of FIG. 13B, a width of the light emission pulse TX, a width of the light reception signal RX, a sampling period in a case of obtaining three samples of a light reception signal RX within the width of the light emission pulse TX, a sampling frequency, and range resolution are associated. In FIG. 13B, a sampling period for obtaining three samples of a light reception signal RX within the width of the light emission pulse TX is illustrated because having approximately three values of samples of the light reception signal RX will facilitate restoration of a light reception signal RX (smaller range resolution being a more precise range resolution).

For example, with the width of the light emission pulse TX of 40 nsec, the sampling period needs to be 20 nsec or less in order to obtain three samples of the light reception signal RX. The range resolution of this case is 6 m.

Further, with the width of the light emission pulse TX of 3.3 nsec, the sampling period needs to be 1.67 nsec or less in order to obtain three samples of the light reception signal RX. The range resolution of this case is 0.5 m (smaller range resolution).

As described above, the sampling period of obtaining three samples of the light reception signal RX varies with the width of the light emission pulse TX; however, in any case, the width of the light emission pulse TX is equal to or greater than the sampling period. In addition, the above example of obtaining three samples of the light reception signal RX is merely an example. At least one sample of light reception signal RX may be obtained within the width of the light emission pulse TX (a light emission period is a time required for obtaining at least one sample of the light reception signal RX).

A design engineer or the like may determine the width of the light emission pulse TX to be equal to or greater than a predetermined value in advance, and may determine a sampling period within which at least one sample or preferably three or more samples of the light reception signal RX are obtained. Alternatively, a designer or the like may determine range resolution to be equal to or less than a predetermined value in advance, and may subsequently determine the width of the light emission pulse TX within which at least one light reception signal or preferably three or more of the light reception signals RX are obtained.

### FUNCTIONAL CONFIGURATION OF STEREO IMAGE OPERATION UNIT

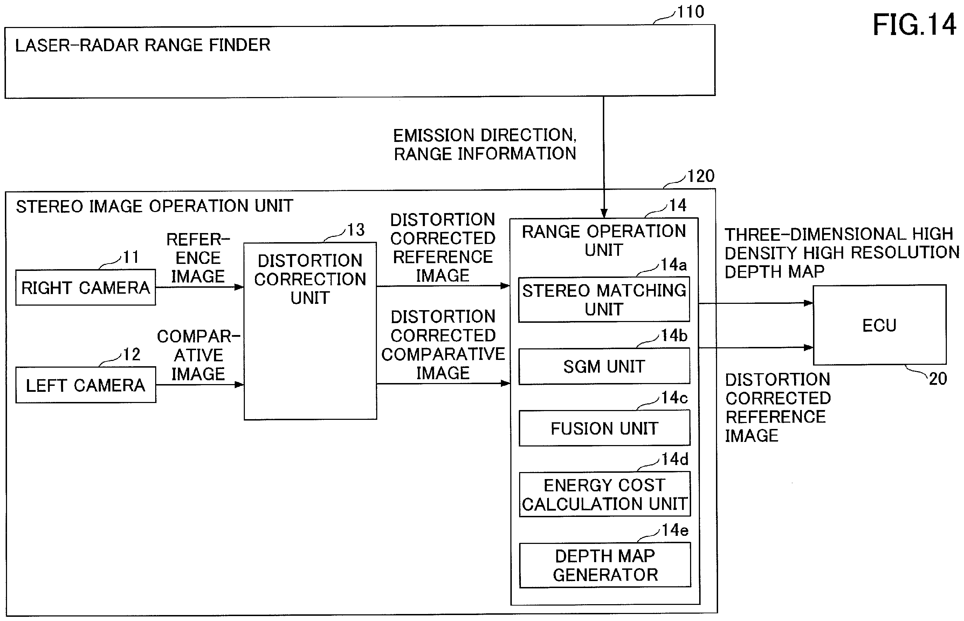

FIG. 14 is a configuration diagram illustrating the range finding system 100. In FIG. 14, functions of the stereo image operation unit 120 are illustrated in blocks. Since the range finding system 100 is a device configured to measure a range, the range finding system 100 may also be regarded as a range finding apparatus. In addition, the range finding system 100 may also be called a range measuring device, range finder, or the like.

As illustrated in FIG. 14, the stereo image operation unit 120 includes a right camera 11, a left camera 12, a distortion correction unit 13, and a range operation unit 14. A stereo camera is formed by the right camera 11 and the left camera 12. In the present embodiment, a captured image imaged by the right camera 11 is used as a reference image, and a captured image imaged by the left camera 12 is used as a comparative image.

The distortion correction unit 13 and the range operation unit 14 may be implemented by using dedicated electronic circuits or may be implemented by executing a program for implementing each unit by a CPU (computer). The stereo image operation unit 120 has a function of an information processing apparatus. The stereo image operation unit 120 may also act as an image processing apparatus from the viewpoint of performing image processing.

The distortion correction unit 13 performs general distortion correction on the reference image and the comparative image. With this image correction, the reference image and the comparative image are corrected so as not to have a difference other than disparity. Image correction is enabled by in-advance calibration. For installing the left camera 12 and the right camera 11, the left camera 12 and the right camera 11 capture images of a subject for calibration (e.g., a checkered pattern diagram). A LUT (Look Up Table) for geometric transformation for converting image data is generated by comparing two images so as to minimize hardware internal error factors. Hardware internal error factors may be camera lens distortion, deviation (misalignment) of optical axis, deviation of focal length, distortion of imaging device, etc. The distortion correction unit 13 performs image correction with reference to such an LUT.

The range operation unit 14 calculates a disparity by applying an algorithm such as block matching or SGM propagation method to the reference image and to the comparative image. Although details will be described later, the range operation unit 14 fuses (integrates) a stereo matching cost C_{ST}(p,Z) specified by the range information output by the laser radar range finder 110 and a LiDAR cost C_{LI}(p,Z), before outputting a depth map.

The range operation unit 14 includes a stereo matching unit 14a configured to calculate a disparity by block matching, an SGM unit 14b configured to calculate a disparity by SGM propagation method, a fusion unit 14c configured to fuse the stereo matching cost C_{ST}(p,Z) and the LiDAR cost C_{LI}(p,Z), an energy cost calculation unit 14d configured to calculate an energy cost S(p, d), and a depth map generator 14e configured to generate a depth map including range values in association with pixels of the reference image.

In FIG. 14, as an example, the depth map and the reference image are sent to an ECU 20 (Electronic Control Unit). The ECU 20 is an electronic control unit of a vehicle. Note that a range finding system 100 installed in a vehicle is referred to as an in-vehicle device. The ECU 20 performs various kinds of driving support using a depth map and a reference image output from the range finding system 100. Various pattern matching is performed on the reference image so as to recognize respective states of a preceding vehicle, a pedestrian, a white line, a traffic signal, and the like.

Driving support may vary with vehicles; however, in a case of a lateral position of an object that overlaps the vehicle width of a reference vehicle, a driving support such as warning, braking, or the like may be performed by ECU 20 in accordance with TTC (Time To Collision) calculated from a distance and a relative speed. Further, when it is difficult to stop a vehicle to avoid collision, a driving support such as steering of wheels in a direction of avoiding collision may be performed by ECU 20.

In addition, the ECU 20 also performs adaptive cruise control (ACC) to keep its distance from a preceding vehicle according to vehicle speed. When the preceding vehicle stops, a reference vehicle following the preceding vehicle also stops, and when the preceding vehicle starts moving, the following reference vehicle also starts moving. In addition, when the ECU 20 performs white line identification or the like, the ECU 20 may perform lane keeping control on steering so as to direct the reference vehicle to travel in the middle of the traveling lane. When there is a risk for the reference vehicle to deviate from the traveling lane, the ECU 20 may perform deviation prevention control or the like in order to direct the reference vehicle to change a traveling direction toward the traveling lane.

Further, when there is an obstacle in the intended direction of motion when the vehicle is stopped, the ECU 20 may control sudden start. For example, when there is an obstacle in the intended direction of motion, which is detected by the operation position of the gearshift, and the operation amount of the accelerator pedal is large, the ECU 20 performs restriction on engine output or generates an alarm to reduce damage.

Note that the configuration of FIG. 14 is merely an example, and the laser radar range finder 110 and the stereo image operation unit 120 may be integrally configured. Alternatively, the stereo image operation unit 120 may be provided with some functions of the laser radar range finder 110. For example, a laser transmission function may be disposed in the laser radar range finder 110, and the laser light receiver 605, the signal amplifier 606, and the ADC sampling unit 610 may be disposed in the stereo image operation unit 120. Further, the ECU 20 may have a function of the stereo image operation unit 120.

### OPERATION OF INTEGER DISPARITY BY BLOCK MATCHING

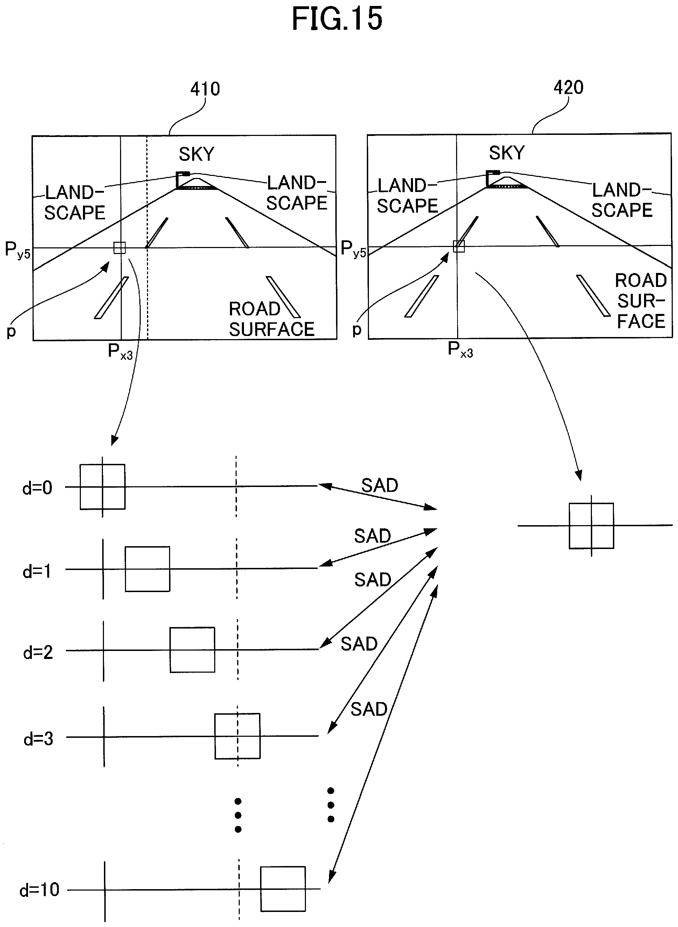

Operation of integer disparity by block matching will be described with reference to FIG. 15. FIG. 15 is a diagram illustrating an example of calculating SAD (Sum of Absolute Differences) as a cost of a target pixel p = (Px3,Py5), in a reference image 420 captured by a right camera 111 and a comparative image 410 captured by a left camera 12.

The imaging positions are different in the reference image 420 and the comparative image 410; thus, a target pixel p = (Px3,Py5) at the same position of each of captured images does not point to the same object, but points to a position shifted in either leftward or rightward in a horizontal direction. Accordingly, a difference, which is SAD (sum of absolute differences) with a block size of 1 × 1 pixel, between a luminance value of a target pixel p = (Px3,Py5) on the reference image 420 and a luminance value of a target pixel p = (Px3,Py5) on the comparative image 410 becomes large.

Here, the target pixel p on the comparative image 410 is shifted toward the right by one pixel. That is, SAD is calculated with disparity d = 1. Specifically, the difference between the luminance value of the target pixel p = (Px3+1,Py5) on the comparison image 410 and the luminance value of the target pixel p = (Px3,Py5) on the reference image 420 is calculated. In the example of FIG. 15, when disparity d = 1, a value of the SAD is large.

Likewise, SAD is calculated with each disparity by changing d = 2, 3,... , and the like. In the example of FIG. 15, with d = 3, an object pointed by the target pixel p = (Px3,Py5) of the reference image 420 and an object pointed by the target pixel p = (Px3+3,Py5) of the comparative image 410 will be the same. Thus, SAD obtained with d = 3 is smaller than SAD obtained with d being other than d = 3.

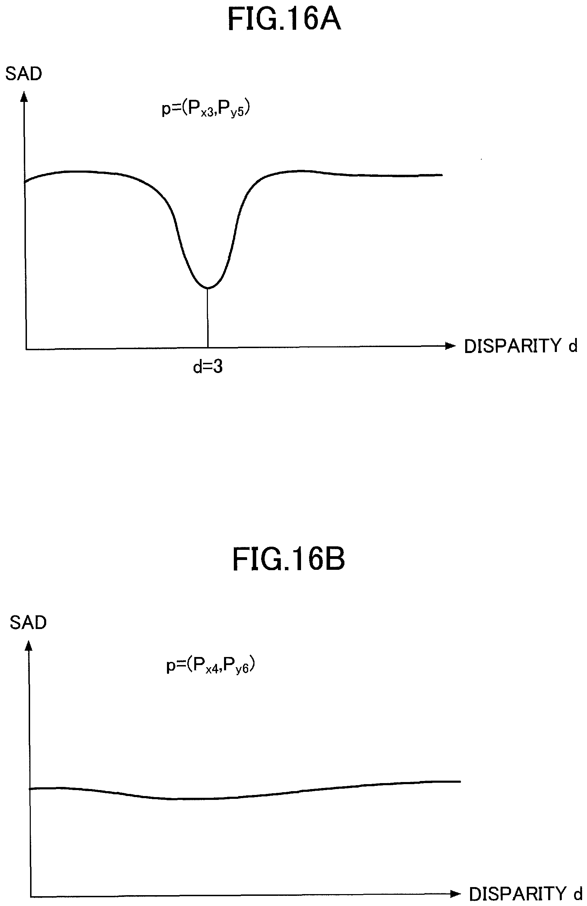

FIG. 16A represents a graph illustrating an example of SAD obtained for each disparity of a target pixel p. SAD is an example of cost C(p,d). In the target pixel p, SAD is the minimum with d = 3; disparity d is thus calculated to be 3.

FIG. 16B represents a graph illustrating an example of SAD obtained for each disparity of another target pixel p. In FIG. 16B, since a change in SAD with respect to a change in disparity d is small, the range operation unit 14 cannot extract disparity. As described above, the block matching technique alone cannot specify a disparity in pixels; hence, the range operation unit 14 performs energy calculation processing (SGM propagation method) in order to make a disparity tangible.

Note that in calculation of SAD (i.e., cost C(p,d)) for each disparity as illustrated in FIG. 16A and 16B, it is preferable to calculate decimal disparity values. As a method of calculating a decimal disparity value, high order polynomial estimation (sixth order), high order polynomial estimation (fourth order), parabola fitting, or the like may be used.

### SGM PROPAGATION METHOD

The range operation unit 14 calculates a propagation cost Lr using an algorithm called SGM propagation method, and calculates an energy cost S(p,d) of a target pixel p using the obtained propagation cost Lr (energy calculation process). Note that the SGM propagation method is one form of dense algorithm.

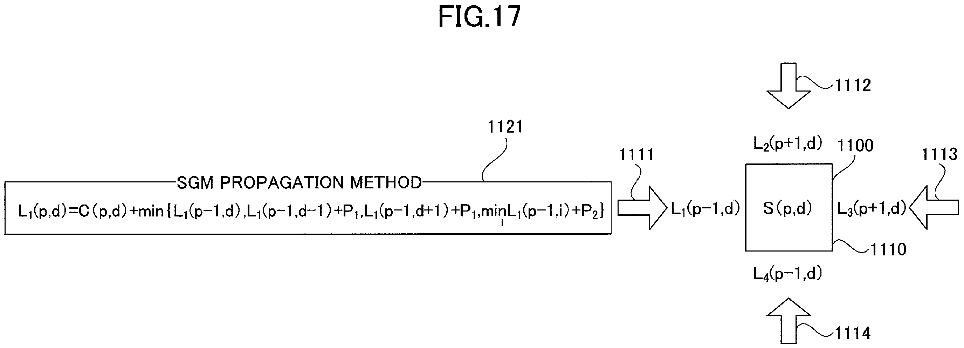

First, with reference to FIG. 17, a process of calculating the propagation cost Lr using the SGM propagation method will be described. FIG. 17 is a diagram schematically illustrating a process of calculating the propagation cost Lr using the SGM propagation method.

In the example of FIG. 17, the propagation cost Lr in four directions is calculated with respect to a pixel 1100, which is defined as a target pixel p. Specifically, FIG. 17 illustrates a case of calculating, with respect to the pixel 1100, each of the propagation cost L₁ in the direction of an arrow 1111, the propagation cost L₂ in the direction of an arrow 1112, the propagation cost L₃ in the direction of an arrow 1113, and the propagation cost L₄ in the direction of an arrow 1114. Note that the number of directions (r) of the propagation cost calculated with respect to the pixel 1100 is not limited to four directions, and may be, for example, eight directions or two directions.

As illustrated in FIG. 17, the propagation cost L₁ in the direction of the arrow 1111 may be calculated by the following formula.
[Eq. 1] 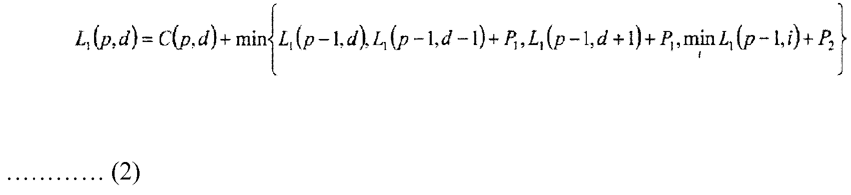 In the above formula (2), p is coordinates of pixel 1100, and d is a disparity. As described above, the propagation cost Li(p,d) may be calculated based on the cost C(p,d) of the pixel 1100 and the propagation cost at each of disparities (d-1 to d+1) of a pixel located on the left side of the pixel 1100. That is, the propagation cost in the direction of the arrow 1111 is sequentially calculated from left to right direction. Note that a propagation interval for propagating propagation costs from left to right direction is not limited to one pixel. That is, the propagation cost Li(p,d) may be calculated using the propagation cost at each disparity of an "a" pixel located on the left side of the pixel 1100.

Similarly, the propagation cost L₂ in the direction of the arrow 1112 is sequentially calculated from upward to downward direction. Likewise, the propagation cost L₃ in the direction of the arrow 1113 is sequentially calculated from right to left direction, and the propagation cost L₄ in the direction of the arrow 1114 is sequentially calculated from downward to upward direction.

Next, the following illustrates, of the energy calculation process, a process of calculating an energy cost S(p,d) of a target pixel p, using the propagation cost Lᵣ.

As described above, the energy cost S(p,d) of each pixel is calculated by the following formula based on the propagation cost from each direction calculated for each pixel.
[Eq. 2] $S \left(p, d\right) = {\sum }_{r} {L}_{r} \left(p, d\right)$ (3) Thus, in the example of FIG. 17, the energy cost may be calculated by S(p,d) = Li(p,d) + L₂(p,d) + L₃(p,d) + L₄(p,d).

### METHOD OF CALCULATING DISTANCE IN PRESENT EMBODIMENT

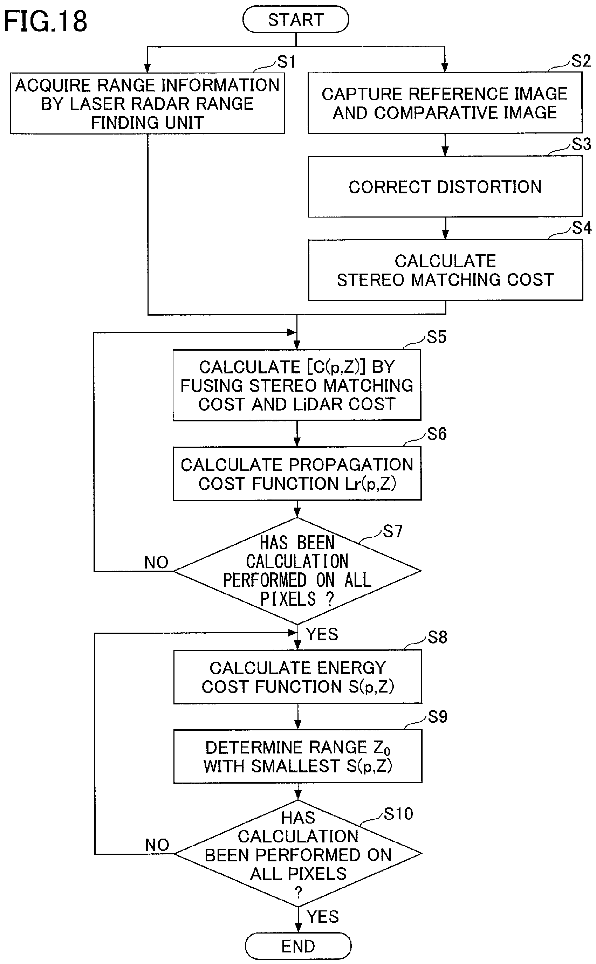

Next, with reference to FIG. 18, a process of generating a depth map by the range finding system 100 of the present embodiment will be described. FIG. 18 is a flowchart illustrating an example of an operation procedure of the range finding system 100.

### (STEPS S1 TO S4)

As illustrated in step S1, the laser radar range finder 110 acquires range information. The laser radar range finder 110 scans so as to include at least an overlapping portion of the imaging ranges of the right camera 11 and the left camera 12 to acquire range information of the imaging ranges. In parallel with this step, the right camera 11 of the stereo image operation unit 120 images a reference image and the left camera 12 of the stereo image operation unit 120 images a comparative image (step S2). The distortion correction unit 13 corrects distortion of each of the reference image and the comparative images so as to eliminate differences between the two images other than disparity (step S3). Next, the stereo image operation unit 120 calculates a stereo matching cost C_{ST}(p,Z) (step S4).

Steps S1 to S4 may be performed synchronously, but the stereo image operation unit 120 may perform steps S1 to S4 asynchronously by using the latest range information of the laser radar range finder 110.

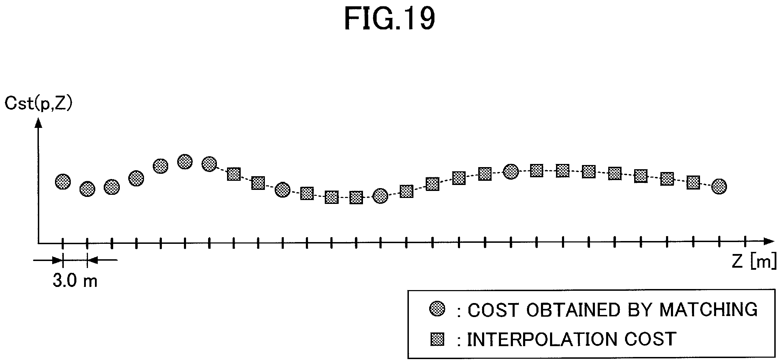

FIG. 19 is a diagram illustrating an example of the stereo matching cost C_{ST}(p,Z). In FIG. 19, costs in disparity space obtained by stereo matching are converted into stereo matching costs C_{ST}(p,Z) in Z space. As described in FIGS. 4A and 4B, the stereo matching costs C_{ST}(p,Z) are not obtained at equal intervals in Z space. Accordingly, the range operation unit 14 interpolates costs obtained by the stereo matching at equal intervals. In FIG. 19, a circle represents a cost obtained by stereo matching, and a square represents a cost obtained by interpolation. The interpolation method may be any method suitable for curve approximation; for example, parabolic fitting, higher order polynomial, spline curve, and the like may be applied. In FIG. 19, the stereo matching cost C_{ST}(p,Z) is calculated with interpolation, for example, at every 3 meters.

Setting of interpolation so as to obtain a stereo matching cost at an interval of 3 meters is merely an example, and setting of the interval approximately the same as the range resolution of LiDAR may be another alternative.

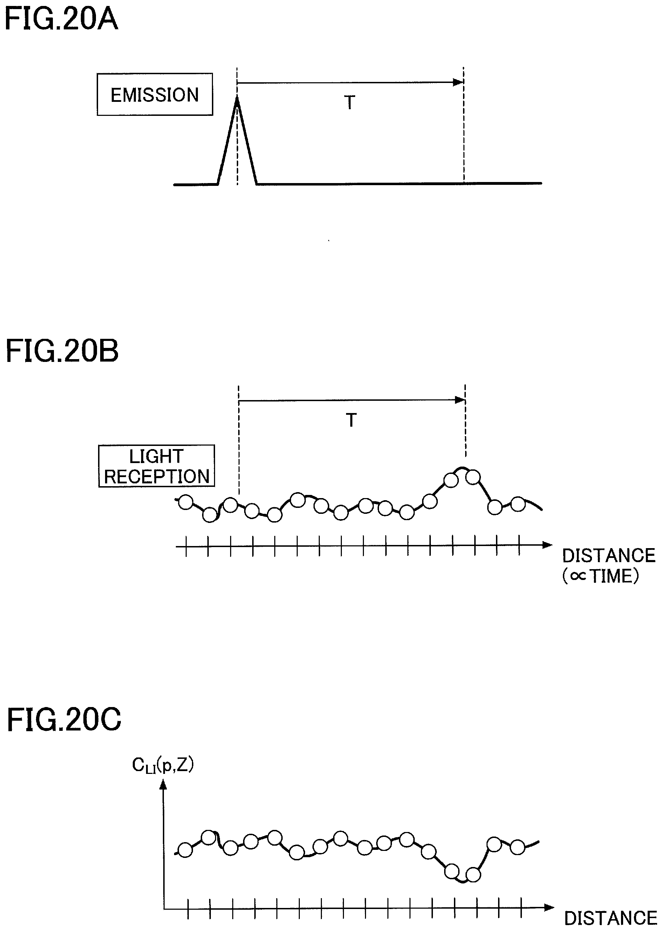

FIGS. 20A to 20C are graphs illustrating a LiDAR cost C_{LI}(p,Z) calculation method. FIG. 20A schematically illustrates the light emission pulse TX, FIG. 20B illustrates periodically sampled light reception signal RX, and FIG. 20C illustrates an example of the LiDAR cost C_{LI}(p,Z). When the laser radar range finder 110 starts outputting the light emission pulse TX, the light reception signal RX starts being sampled periodically. Time (period) for which the ADC sampling unit 610 continues sampling with respect to output of one light emission pulse TX is predetermined. For example, time for which the ADC sampling unit 610 continues sampling with respect to an output of one light emission pulse TX may be time corresponding to 120 m in distance or the like.

The time interval counter 607 measures a time T from the output of the light emission pulse TX to obtaining a sample of the light reception signal RX at each sampling point. There is a following relationship between a time T and a distance to an object. $Distance to object = Speed of light \times T / 2$ Thus, the signal processor 601 is enabled to convert a time T into range information.

The relationship between a light reception signal RX and a distance illustrated in FIG. 20B indicates that the greater the light reception signal RX, the more likely an object is present at that distance. However, the stereo matching cost becomes the smallest even at a distance at which an object is most likely to be present. Hence, in order to fuse the stereo matching cost and the LiDAR cost, it is preferable to have a waveform of the light reception signal RX such that the smaller the light reception signal RX, the more likely an object is to be present. The signal processor 601 converts a light reception signal RX of FIG. 20B into the LiDAR cost C_{LI}(p,Z) illustrated in FIG. 20C. There are various methods for conversion; however, any of the methods may be used insofar as the LiDAR cost C_{LI}(p,Z) becomes the smallest at the longest distance of the light reception signal RX. As a simple example, there is a conversion in which a waveform of a light reception signal RX is reversed in a vertical direction based on a constant value of the light reception signal RX.

In FIG. 20C, a waveform of the light reception signal RX is converted into a waveform such that the smaller the light reception signal RX, the most likely an object is to be present; however, the stereo image operation unit 120 may transform a waveform of the stereo matching cost such that the waveform of the stereo matching cost becomes greatest at a distance at which an object is most likely to be present.

### (STEP S5)

Next, the range operation unit 14 fuses the stereo matching cost C_{ST}(p,Z) and the LiDAR cost C_{LI}(p,Z) so as to calculate a cost C(p,Z). The above calculation method may be represented by the following formula. $C \left(p, Z\right) = A \times {C}_{LI} \left(p, Z\right) + B \times {C}_{ST} \left(p, Z\right)$ (4)
A: LiDAR cost coefficient (weight)
B: Stereo matching cost coefficient (weight)
Coefficients A and B are important factors in terms of selecting one of the LiDAR cost and stereo matching cost to have a stronger effect in fusion. LiDAR and stereo matching each have conditions for obtaining high accuracy; hence, one of LiDAR and stereo matching may be determined empirically. The coefficients A and B may be set by reading from a table, in which the coefficients A and B are predetermined for each of environmental conditions (time zone, weather, current location, etc.). The stereo image operation unit 120 performs object recognition of the reference image to identify an object reflected in each range of the reference image, the coefficient A and the coefficient B may be changed on a per-range basis.

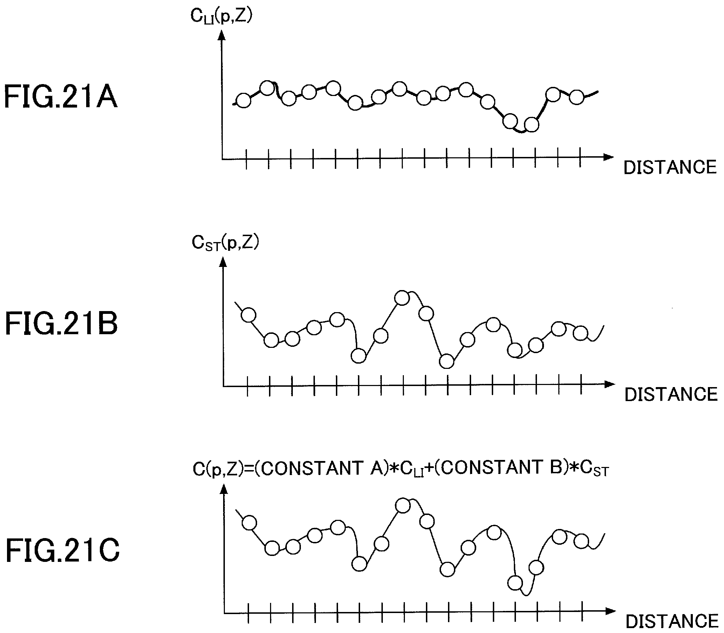

FIGS. 21A to 21C are diagrams schematically illustrating an example of fusion of stereo matching cost C_{ST}(p,Z) and LiDAR cost C_{LI}(p,Z). FIG. 21A illustrates a LiDAR cost C_{LI}(p,Z), and FIG. 21B illustrates a stereo matching cost C_{ST}(p,Z). The range operation unit 14 multiplies the LiDAR cost C_{LI}(p,Z) by a coefficient A, multiplies the stereo matching cost C_{ST}(p,Z) by a coefficient B, and adds the obtained results (i.e., coefficient A*CLI + coefficient B*CST) at approximately equal intervals. According to the interpolation of the stereo matching costs C_{ST}(p,Z) and the sampling period of the ADC sampling unit 610, cost values of the stereo matching costs C_{ST}(p,Z) and the LiDAR cost C_{LI}(p,Z) are obtained at approximately the same intervals (at approximately the same distance). LiDAR costs C_{LI}(p,Z) may also be interpolated in the same manner as required.

As a result, as illustrated in FIG. 21C, the stereo matching costs C_{ST}(p,Z) and the LiDAR costs C_{LI}(p,Z) are fused.

### (STEP S6)

Next, the range operation unit 14 calculates a propagation cost Lᵣ(p,Z). The formula for calculating the propagation cost Lᵣ(p,Z) is illustrated below.
[Eq. 3] 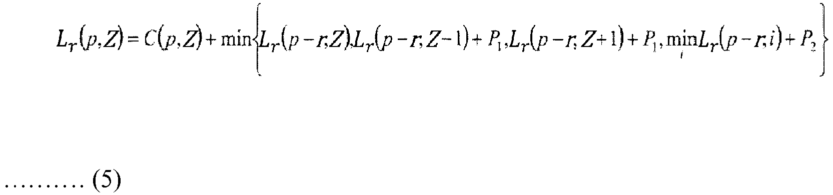 A first term of the propagation cost Lᵣ(p,Z) is a cost C(p,Z) calculated in step S5 by fusion of the stereo matching cost C_{ST}(p,Z) and the LiDAR cost C_{LI}(p,Z). A second term is a propagation cost by the SGM propagation method performed in Z space. The propagation cost Lᵣ(p,Z) is calculated based on the first term and the second term.

In the present embodiment, the propagation cost by the SGM propagation method performed in Z space is not indispensable; hence, the propagation cost by the SGM propagation method may not be calculated.

### (STEP S7)

The range operation unit 14 determines whether the propagation cost Lᵣ(p,Z) has been calculated for all the pixels. Steps S5 and S6 are repeated until the calculations of all the pixels are completed.

### (STEP S8)

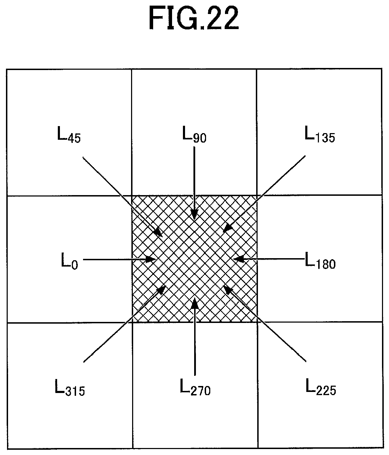

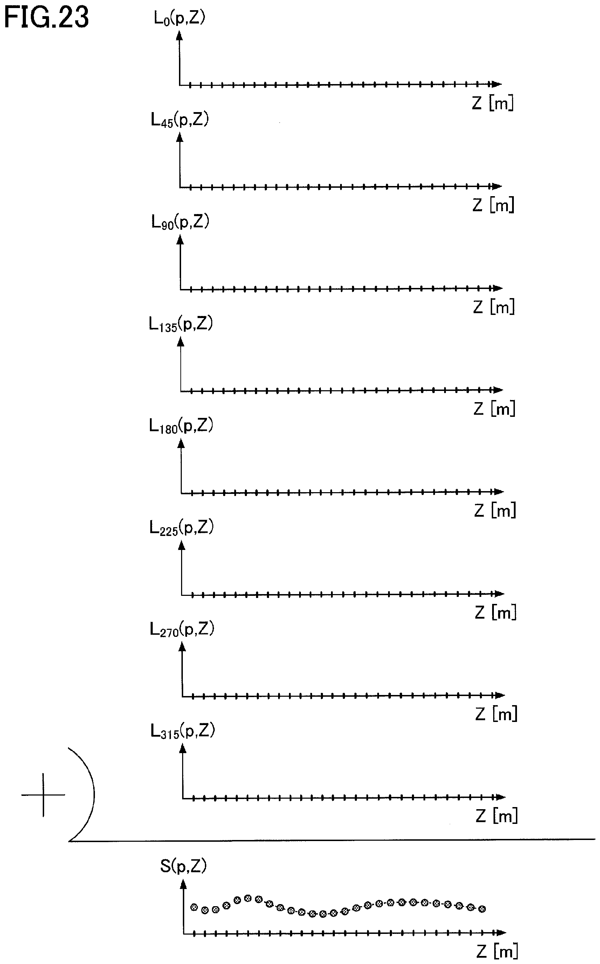

When the propagation cost Lᵣ(p,Z) is calculated for all the pixels, the range operation unit 14 calculates an energy cost S(p,Z). $S \left(p, Z\right) = {ΣL}_{r} \left(p, Z\right)$ (6) FIGS. 22 and 23 are diagrams illustrating an energy cost S(p,Z) calculation method. Although the propagation cost Lᵣ(p,Z) is calculated for each pixel, it is considered that the propagation cost Lᵣ(p,Z) of a certain pixel may be affected by peripheral propagation costs Lᵣ(p,Z). Thus, a more accurate propagation cost Lᵣ(p,Z) of the target pixel may be calculated by superimposing the peripheral propagation costs Lᵣ(p,Z) of peripheral pixels around a target pixel.

In FIG. 22, the propagation costs Lᵣ(p,Z) of peripheral eight pixels are superimposed. In this case, the following calculation is performed for each distance as illustrated in FIG. 23. $S \left(p, Z\right) = {L}_{0} \left(p, Z\right) + {L}_{45} \left(p, Z\right) + {L}_{90} \left(p, Z\right) + {L}_{135} \left(p, Z\right) + {L}_{180} \left(p, Z\right) + {L}_{225} \left(p, Z\right) + {L}_{270} \left(p, Z\right) + {L}_{315} \left(p, Z\right)$ (7) FIG. 23 and the above formula (7) indicate that the propagation costs Lᵣ(p,Z) of eight pixels around the target pixel are superimposed in Z space. As a result, the energy cost S(p,Z) of the target pixel is obtained.

Note that the superposition of the propagation costs Lᵣ(p,Z) of the peripheral eight pixels is merely an example. The number of peripheral pixels such as 4 pixels, 5 pixels or 16 pixels, of which the propagation costs Lᵣ(p,Z) are superimposed, may be determined based on the operational load and the accuracy of a distance. Alternatively, the superposition of the propagation costs Lᵣ(p,Z) may not necessarily be performed at all.

### (STEP S9)

The range operation unit 14 determines a distance Zo at which an energy cost S(p,Z) becomes the minimum. The distance Zo is a range value of the target pixel.

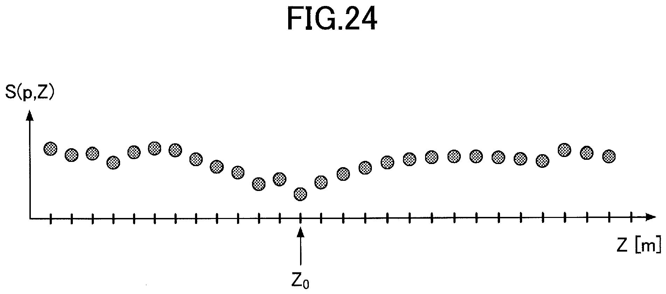

FIG. 24 is a diagram illustrating an example of a method of calculating a distance Zo at which the energy cost S(p,Z) is minimum. In this example, Z at which the energy cost S(p,Z) becomes the minimum is estimated to be a most reliable value as a range value of a target pixel.

The distance Z below the decimal point may be calculated using high order polynomial estimation (sixth order), higher order polynomial estimation (fourth order), parabola fitting, or the like.

### (STEP S10)

When the energy cost is calculated for all the pixels, the process in FIG. 18 ends.

### RESOLUTION OF Z SPACE

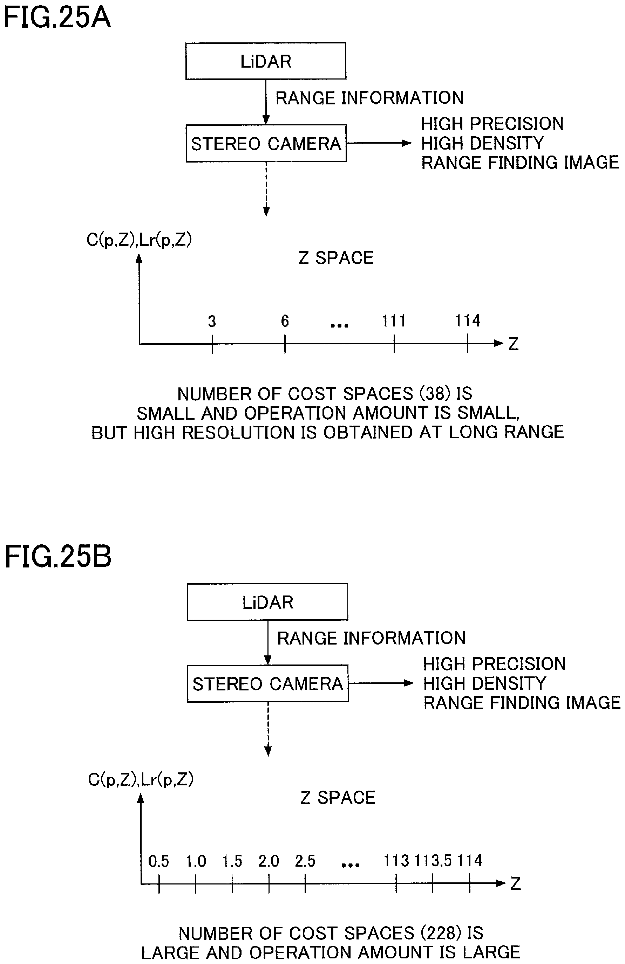

Supplemental illustration of the range resolution in Z space will be given with reference to FIGS. 25A and 25B. FIG. 25A illustrates a Z space with a high density range resolution, and FIG. 25B illustrates a Z space with a low density range resolution for comparison. Since the stereo matching cost is interpolated as described above, the LiDAR cost and stereo matching cost have approximately the same range resolution. For example, the range resolution in FIG. 25A is 3 meters, and the range resolution in FIG. 25B is 0.5 meters. Note that the range resolutions of 3 meters and 0.5 meters are merely examples.

In FIG. 25A, 38 costs are obtained within 114 meters, and in FIG. 25B, 228 costs are obtained within 114 meters. Hence, the range resolution illustrated in FIG. 25B, which is higher than the range resolution in FIG. 25A, is preferable. However, this range resolution of 3 meters is higher than the range resolution of the stereo matching cost at a long range (see FIGS. 4A and 4B). Further, as illustrated in FIG. 25A, operation load of the laser radar range finder 110 may be reduced by lowering the resolution in Z space. In addition, a microcomputer installed on the laser radar range finder 110 may be small in size, such that the range finding system 100 may be easily downsized.

As described above, since the sampling period of the light reception signal RX may be increased with the range resolution of approximately 3 meters, the width of the light emission pulse TX may also be increased, and the range finding system 100 may be easily downsized.

### CHANGE IN RANGE RESOLUTION ACCORDING TO DISTANCE RANGE

Range resolution does not need to be constant for all the distance ranges. The range resolution of the stereo image operation unit 120 is known to be high at a short range. When the range resolution of the stereo image operation unit 120 at a short range is made to match the range resolution of the laser radar distance range finder 110, high-density range information will be discarded.

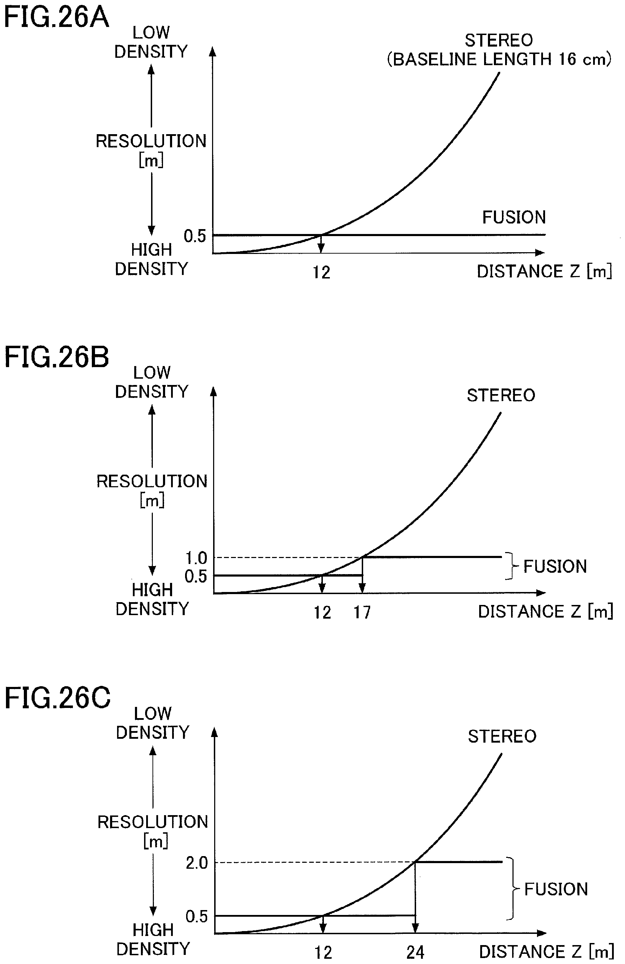

FIGS. 26A to 26C are graphs illustrating examples of respective range resolutions at a short range and at a long range of the laser radar range finder 110 and the stereo image operation unit 120. FIG. 26A illustrates an example of a relationship between a distance and range resolution. In FIGS. 26A to 26C, the baseline length of the stereo camera is 16 cm. In this case, the range resolution of the stereo image operation unit is 0.5 m or less at a distance of 12 m or less. When the range resolution of the laser radar range finder 110 is 0.5 m, the range resolution of the stereo image operation unit 120 is denser (higher) than the range resolution of the laser radar range finder 110 at a distance of 12 m or less.

When the range resolution of the stereo image operation unit 120 is 0.5 m, and the laser radar range finder 110 is enabled to measure a distance up to 120 m, the number of cost spaces is 120/0.5 = 240.

FIG. 26B illustrates an example of the range resolution when the spatial resolution is changed at 17 m as a boundary. In other words, when the distance is 17 m or less, 0.5 m is fused as range resolution, and when the distance exceeds 17 m, 1.0 m is fused as range resolution. In this case, the number of cost spaces is 17/0.5 + (120 - 17)/1.0 = 137. Thus, a high-density range resolution may be obtained at a short distance, and the operation load may be reduced.

In order to fuse the stereo matching cost C_{ST}(p,Z) and the LiDAR cost C_{LI}(p,Z), the stereo image operation unit 120 changes an interpolation interval at 17 m as a boundary. That is, when the distance is 17 m or less, the interval interpolation is not performed, or an interpolation interval is made dense (narrow). When the distance exceeds 17 m, interval interpolation is performed such that the interpolation interval is approximately equal to the range resolution of LiDAR cost C_{LI}(p,Z). Note that when the distance is 17 m or less, a distance at which the stereo matching cost is obtained does not match a distance at which the LiDAR cost is obtained. Thus, the LiDAR costs may be interpolated such that the LiDAR costs are obtained at a distance where the stereo matching costs are obtained.

FIG. 26C is a graph illustrating an example of a range resolution when a spatial resolution is changed at 24 m as a boundary. That is, when the distance is 24 m or less, 0.5 m is fused as range resolution, and when the distance is more than 24 m, 2.0 m is fused as range resolution. In this case, the number of cost spaces is 24/0.5 + (120 - 24)/2.0 = 96. Thus, a high-density range resolution may be obtained at a short range, and the operation load may be reduced.

There are other interpolation methods for a short range and a long range as follows. The following certain distance is an example of a threshold.
(i) A stereo resolution is used from a certain distance to a shorter distance (a value less than a threshold), and a predetermined resolution 1 is used from a certain distance to a longer distance (a value equal to or more than the threshold).
(ii) A predetermined resolution 1 is used from a certain distance to a shorter distance (a value less than the threshold) and a predetermined resolution 2 is used from a certain distance to a longer distance (a value equal to or more than the threshold) (density of predetermined resolution 1 > density of predetermined resolution 2).
(iii) A stereo resolution is used from a certain distance to a shorter distance (a value less than the threshold), a predetermined resolution 1 is used from a certain distance 1 to a longer distance, and a predetermined resolution 2 is used from a certain distance 2 (> distance 1) to a longer distance.
(iv) A predetermined resolution 1 is used from a certain distance 1 to a shorter distance, a predetermined resolution 2 is used from the certain distance 1 to a longer distance, and a predetermined resolution 3 is used from a certain distance 2 to a longer distance.

### ANOTHER EXAMPLE OF FUSION OF STEREO MATCHING COST AND LIDAR COST

In the present embodiment, SGM is used for fusing stereo matching cost and LiDAR cost. However, there is a propagation method that does not need to use SGM in these fusions. For example, the following method of omitting the calculation of the propagation cost Lᵣ may be used as another example of the propagation method. $\begin{matrix}C \left(p, Z\right) = A \times {C}_{LI} \left(p, Z\right) + B \times {C}_{ST} \left(p, Z\right) \\ S \left(p, Z\right) = Σ C \left(p, Z\right)\end{matrix}$ (8) In the distance-based SGM known in the related art, the processing load of the propagation cost Lᵣ is high. By contrast, in the present embodiment, since the LiDAR cost has a peak, calculation of the propagation cost Lᵣ of the formula (5) may be omitted to reduce the load, as illustrated in the formula (8).

### EFFECTIVENESS

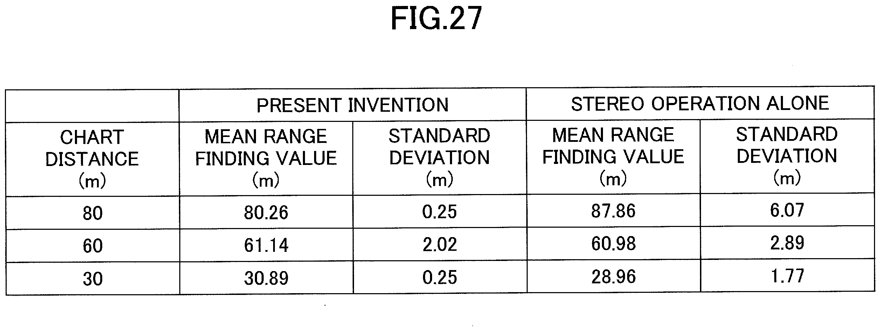

FIG. 27 is a table illustrating examples of effectiveness of range finding results obtained by a range finding system. In FIG. 27, a chart means a signboard shaped object. The chart is placed at measurement positions of 80, 60, and 30 m from the range finding system 100. The mean range finding values measured by the range finding system 100 of the present embodiment are 80.26, 61.14, and 30.89 m, respectively, and the standard deviations of the mean values are 0.25, 2.02, and 0.25 m, respectively.

Mean range finding values obtained by related art stereo matching alone are 87.86, 60.98, and 28.96, respectively, and the standard deviations of the mean values are 6.07, 2.89, and 1.77, respectively. The accuracy of the range finding system 100 of the present embodiment is thus improved except for the mean range finding value of the chart at a distance of 60 m.

### OVERVIEW

The range finding system 100 of the present embodiment has the following effects in view of the range finding method using a stereo camera.
- Range finding accuracy: measurement or detection of an object at a long range may become easier due to reduced dispersion of an object surface and improved surface discontinuity around the object surface.
- Anti-physical marking property: pixels, which are not used due to mismatching in repetitive patterns or low texture, may be used by fusion.
- Environmental resistance: high precision long range finding becomes possible even at night.
- Portion of an image where the object bulges due to SGM propagation is compensated with the range values obtained by LiDAR.

In view of the range finding method using LiDAR, there is the following effect.
- Spatial resolution increases.

Further, since the wider pulse width of the reception signal RX is obtained, limitations on the number and size of the light receiving elements are reduced. As a result, the range finding system may be easily downsized. Further, for example, when the range resolution of the laser radar range finder unit 110 is set to 3 m, the number of cost spaces may be reduced, and the processing load at the range operation may be reduced.

Furthermore, when the emission pulse TX is wide and the width of the reception signal is wide, the sampling frequency of A/D conversion need not be so high (fast). Thus, even when the noise level and the signal level are approximately the same, a noise level signal will not be sampled.

### OTHER PREFERRED EMBODIMENTS

Although the best modes for carrying out the present invention have been described above by way of embodiments, the present invention is not limited to these embodiments and various modifications and substitution may be made without departing from the spirit of the present invention.

For example, although the automobile 200 is provided as a moving object in which the range finding system 100 is installed, the range finding system 100 may be applied to a wide range of moving bodies. For example, as a part of such wide ranges, the range finding system 100 is effective for moving bodies that autonomously move without manipulation by humans. For example, the range finding system 100 may be applied to airplanes, drones, ships, robots and the like.

Further, the range finding system 100 may generate a depth map of lateral sides or a rear side of the moving body, in addition to the depth map of the front side of the moving body. The range finding system 100 may also generate an all-around depth map of front, lateral, and rear sides of the moving body.

Further, a depth map may be color or monochrome.

Moreover, it is sufficient to use a laser light having a wavelength falling within a wavelength range suitable for range measurement, such as visible light, infrared light, or ultraviolet light (within a range not affecting a human body); or a laser light to be used may be regarded as an electromagnetic wave.

Further, in the present embodiment, LIDAR has been described as a range finding method with a high range resolution; however, millimeter waves or ultrasonic waves or the like may also be applied.

The stereo image operation unit 120 is an example of an image processor. The laser radar range finder 110 is an example of a range information acquisition unit. The light reception signal with respect to a distance as illustrated in FIGS. 20A to 20C is an example of first distance information. The stereo matching cost is an example of second distance information. The laser output unit 608 is an example of an emitter. The laser light receiver 605, the signal amplifier 606, and the ADC sampling unit 610 are an example of a receiver.

### [Reference Signs List]

- 8: stereo camera
- 9: LiDAR
- 20: ECU
- 100: range finding system
- 110: laser radar range finder
- 120: stereo image operation unit
- 200: automobile

## Claims

1. A range finding system (100) comprising:
a range information acquisition unit (110) configured to detect first range information by a TOF, time-of-flight, scheme;
an image processor (120) configured to integrate the first range information with second range information, the second range information being obtained through image processing of a plurality of stereo images captured by a plurality of imaging units (11, 12);
an emitter (608) configured to emit a light emission pulse; and
a receiver (605, 606, 610) configured to detect a light reception signal obtained as a result of the light emission pulse being reflected off an object, wherein
a width of the light emission pulse emitted by the emitter (608) and a sampling period in which the receiver (605, 606, 610) samples the light reception signal are configured such that the width of the light emission pulse emitted by the emitter (608) corresponds to a time equal to or longer than a time required for obtaining at least one or more samples of the light reception signal, and **characterized in that** the width of the light emission pulse emitted by the emitter (608) is configured such that of a range resolution of the first range information and a range resolution of the second range information, the range resolution of the second range information is denser than the range resolution of the first range information, at a distance shorter than a predetermined distance.

2. The range finding system (100) according to claim 1, wherein
a sampling period in which the receiver (605, 606, 610) samples the light reception signal is configured such that three or more samples of the light reception signal are obtained with respect to the width of the light emission pulse.

3. The range finding system (100) according to claim 1, wherein
the sampling period is configured such that a range resolution of the first range information is three meters.

4. The range finding system (100) according to any one of claims 1 to 3, wherein
the range information acquisition unit (110) is configured to acquire a light reception signal with respect to time and convert the light reception signal into a light reception signal with respect to distance, and output the light reception signal with respect to distance to the image processor (120),
the image processor (120) converts the light reception signal with respect to distance into a first cost function that decreases as a value of the light reception signal increases, and subsequently integrates the first cost function with a stereo matching cost function that is obtained by the image processing, or
the image processor converts a stereo matching cost function obtained by the image processing into a second cost function that increases as a value of the stereo matching cost function decreases, and subsequently integrates the second cost function with the light reception signal with respect to distance output by the range information acquisition unit (110).

5. The range finding system (100) according to claim 4, wherein
the image processor interpolates the stereo matching cost function at an interval corresponding to a range resolution determined by the sampling period, and
integrates the interpolated stereo matching cost function with the first cost function that is converted so as to decrease as a value of the light reception signal corresponding with respect to distance increases.

6. The range finding system (100) according to claim 4, wherein
the image processor interpolates the stereo matching cost function at an interval, wherein the interpolation interval is different for distances at which a range resolution of the image processor is lower than a range resolution of the range information acquisition unit, distances at which a range resolution of the image processor is higher than a range resolution of the range information acquisition unit, and
integrates the interpolated stereo matching cost function with the first cost function that is converted so as to decrease as a value of the light reception signal corresponding with respect to distance increases.

7. The range finding system (100) according to claim 4, wherein
the image processor interpolates the stereo matching cost function at an interval, wherein the interpolation interval corresponds to a resolution of the image processor for distances less than a threshold value and the interpolation interval corresponds to a resolution of the range information acquisition unit for distances equal to or greater than the threshold value, and
integrates the interpolated stereo matching cost function with the first cost function that is converted so as to decrease as a value of the light reception signal corresponding with respect to distance increases.

8. The range finding system (100) according to any one of claims 1 to 5, wherein
the range information acquisition unit and the image processor having the plurality of imaging units are housed in one housing, and the range information acquisition unit is disposed between the plurality of imaging units.

9. The range finding system (100) according to claim 8, wherein
a length of the plurality of imaging units and the range information acquisition unit disposed in a straight line is longer than a length of the range information acquisition unit and is substantially equal to or less than 30 cm.

10. The range finding system (100) according to claim 8 or 9, wherein
a length of the plurality of imaging units and the range information acquisition unit disposed in a straight line is substantially equal to or longer than 8 cm and is substantially equal to or less than 30 cm.

11. A range finding method performed by a range finding system (100), the range finding system (100) including a range information acquisition unit (110) configured to detect first range information by a TOF, time-of-flight, scheme; and an image processor (120) configured to integrate the first range information with second range information, the second range information being obtained through image processing of a plurality of stereo images captured by a plurality of imaging units (11, 12), the range finding method comprising:
emitting, by an emitter, a light emission pulse; and
detecting, by a receiver, a light reception signal obtained as a result of the light emission pulse being reflected off an object, wherein
when a width of the light emission pulse emitted by the emitter (608) and a sampling period in which the receiver (605, 606, 610) samples the light reception signal are configured such that the width of the light emission pulse emitted by the emitter (608) corresponds to a time equal to or longer than a time required for obtaining at least one or more samples of the light reception signal, and **characterized in that** the width of the light emission pulse emitted by the emitter (608) is configured such that of a range resolution of the first range information and a range resolution of the second range information, the range resolution of the second range information is denser than the range resolution of the first range information, at a distance shorter than a predetermined distance.

12. An in-vehicle device to be installed in a vehicle, the in-vehicle device comprising:
the range finding system (100) of claim 1, and wherein
the image processor (120) generates a depth map in which range values are associated with pixels of the captured image to output the depth map to a control unit of the vehicle.

13. A vehicle comprising:
the range finding system (100) of claim 1; and
a control unit configured to control the vehicle using a depth map in which range values are associated with pixels of a captured image.

## Patentansprüche

1. Entfernungsmessungssystem (100), umfassend:
eine Entfernungsinformationserfassungseinheit (110), die konfiguriert ist, erste Entfernungsinformationen durch ein TOF-, Time-of-Flight, -Schema zu detektieren;
einen Bildprozessor (120), der konfiguriert ist, die ersten Entfernungsinformationen in die zweiten Entfernungsinformationen zu integrieren, wobei die zweiten Entfernungsinformationen durch Bildverarbeitung von mehreren Stereobildern erhalten wurden, die durch mehrere Bildgebungseinheiten (11, 12) erfasst wurden;
einen Emitter (608), der konfiguriert ist, einen Lichtemissionsimpuls zu emittieren; und
einen Empfänger (605, 606, 610), der konfiguriert ist, ein Lichtempfangssignal zu detektieren, das als Ergebnis des Lichtemissionsimpulses, der von einem Objekt reflektiert wurde, erhalten wurde, wobei
eine Breite des von dem Emitter (608) ausgesendeten Lichtemissionsimpulses und eine Abtastperiode, in welcher der Empfänger (605, 606, 610) das Lichtempfangssignal abtastet, derart konfiguriert sind, dass die Breite des von dem Sender (608) emittierten Lichtemissionsimpulses einer Zeit entspricht, die gleich oder länger ist als eine Zeit, die erforderlich ist, um mindestens einen oder mehrere Abtastwerte des Lichtempfangssignals zu erhalten, und **dadurch gekennzeichnet, dass** die Breite des von dem Emitter (608) emittierten Lichtemissionsimpulses derart konfiguriert ist, dass von einer Entfernungsauflösung der ersten Entfernungsinformationen und einer Entfernungsauflösung der zweiten Entfernungsinformationen die Entfernungsauflösung der zweiten Entfernungsinformationen um einen Abstand, der kürzer ist als ein vorbestimmter Abstand, dichter ist als die Entfernungsauflösung der ersten Entfernungsinformationen.

2. Entfernungsmessungssystem (100) nach Anspruch 1, wobei
eine Abtastperiode, in welcher der Empfänger (605, 606, 610) das Lichtempfangssignal abtastet, derart konfiguriert ist, dass in Bezug auf die Breite des Lichtemissionsimpulses drei oder mehr Abtastwerte des Lichtempfangssignals erhalten werden.

3. Entfernungsmessungssystem (100) nach Anspruch 1, wobei
die Abtastperiode derart konfiguriert ist, dass eine Entfernungsauflösung der ersten Entfernungsinformationen drei Meter beträgt.

4. Entfernungsmessungssystem (100) nach einem der Ansprüche 1 bis 3, wobei
die Entfernungsinformationserfassungseinheit (110) konfiguriert ist, ein Lichtempfangssignal in Bezug auf die Zeit zu erfassen und das Lichtempfangssignal in ein Lichtempfangssignal hinsichtlich Abstand umzuwandeln und das Lichtempfangssignal hinsichtlich Abstand an den Bildprozessor (120) auszugeben,
der Bildprozessor (120) das Lichtempfangssignal hinsichtlich Abstand in eine erste Kostenfunktion umwandelt, die abnimmt, während ein Wert des Lichtempfangssignals zunimmt, und anschließend die erste Kostenfunktion in eine Stereo-Matching-Kostenfunktion integriert, die durch die Bildverarbeitung erhalten wurde, oder
der Bildprozessor eine durch die Bildverarbeitung erhaltene Stereo-Matching-Kostenfunktion in eine zweite Kostenfunktion umwandelt, die zunimmt, während ein Wert der Stereo-Matching-Kostenfunktion abnimmt, und anschließend die zweite Kostenfunktion in das Lichtempfangssignal hinsichtlich Abstand, das von der Entfernungsinformationserfassungseinheit (110) ausgegeben wird, integriert.

5. Entfernungsmessungssystem (100) nach Anspruch 4, wobei
der Bildprozessor die Stereo-Matching-Kostenfunktion in einem Intervall interpoliert, das einer durch die Abtastperiode bestimmten Entfernungsauflösung entspricht, und
die interpolierte Stereo-Matching-Kostenfunktion in die erste Kostenfunktion integriert, die konvertiert wird, sodass sie abnimmt, während ein Wert des Lichtempfangssignals hinsichtlich Abstand zunimmt.

6. Entfernungsmessungssystem (100) nach Anspruch 4, wobei
der Bildprozessor die Stereo-Matching-Kostenfunktion in einem Intervall interpoliert, wobei sich das Interpolationsintervall für Abstände, bei denen eine Entfernungsauflösung des Bildprozessors niedriger ist als eine Entfernungsauflösung der Entfernungsinformationserfassungseinheit, von Abständen, bei denen eine Entfernungsauflösung des Bildprozessors höher ist als eine Entfernungsauflösung der Entfernungsinformationserfassungseinheit, unterscheidet, und
die interpolierte Stereo-Matching-Kostenfunktion in die erste Kostenfunktion integriert, die konvertiert wird, sodass sie abnimmt, während ein Wert des Lichtempfangssignals hinsichtlich Abstand zunimmt.

7. Entfernungsmessungssystem (100) nach Anspruch 4, wobei
der Bildprozessor die Stereo-Matching-Kostenfunktion in einem Intervall interpoliert, wobei das Interpolationsintervall einer Auflösung des Bildprozessors für Abstände kleiner als ein Schwellenwert entspricht und das Interpolationsintervall einer Auflösung der Entfernungsinformationserfassungseinheit für Abstände gleich oder größer als der Schwellenwert entspricht, und
die interpolierte Stereo-Matching-Kostenfunktion in die erste Kostenfunktion integriert, die konvertiert wird, sodass sie abnimmt, während ein Wert des Lichtempfangssignals hinsichtlich Abstand zunimmt.

8. Entfernungsmessungssystem (100) nach einem der Ansprüche 1 bis 5, wobei
die Entfernungsinformationserfassungseinheit und der Bildprozessor mit den mehreren Bildgebungseinheiten in einem Gehäuse untergebracht sind und die Entfernungsinformationserfassungseinheit zwischen den mehreren Bildgebungseinheiten angeordnet ist.

9. Entfernungsmessungssystem (100) nach Anspruch 8, wobei
eine Länge der mehreren Bildgebungseinheiten und der Entfernungsinformationserfassungseinheit in einer geraden Linie angeordnet länger ist als eine Länge der Entfernungsinformationserfassungseinheit ist und im Wesentlichen gleich oder kleiner als 30 cm ist.

10. Entfernungsmessungssystem (100) nach Anspruch 8 oder 9, wobei
eine Länge der mehreren Bildgebungseinheiten und der Entfernungsinformationserfassungseinheit in einer geraden Linie angeordnet im Wesentlichen gleich oder länger als 8 cm ist und im Wesentlichen gleich oder kleiner als 30 cm ist.

11. Entfernungsmessungsverfahren, das von einem Entfernungsmessungssystem (100) ausgeführt wird, wobei das Entfernungsmessungssystem (100) eine Entfernungsinformationserfassungseinheit (110) umfasst, die konfiguriert ist, erste Entfernungsinformationen durch ein TOF-, Time-of-Flight, -Schema zu detektieren; und einen Bildprozessor (120), der konfiguriert ist, die ersten Entfernungsinformationen in die zweiten Entfernungsinformationen zu integrieren, wobei die zweiten Entfernungsinformationen durch Bildverarbeitung von mehreren Stereobildern erhalten wurden, die durch mehrere Bildgebungseinheiten (11, 12) erfasst wurden, wobei das Entfernungsmessungsverfahren umfasst:
Emittieren, durch einen Emitter, eines Lichtemissionsimpulses; und
Detektieren, durch einen Empfänger, eines Lichtempfangssignals, das als Ergebnis der Reflexion des Lichtemissionsimpulses von einem Objekt erhalten wurde, wobei
wenn eine Breite des von dem Emitter (608) emittierten Lichtemissionsimpulses und eine Abtastperiode, in welcher der Empfänger (605, 606, 610) das Lichtempfangssignal abtastet, derart konfiguriert sind, dass die Breite des von dem Emitter (608) emittierten Lichtemissionsimpulses einer Zeit entspricht, die gleich oder länger ist als eine Zeit, die erforderlich ist, um mindestens einen oder mehrere Abtastwerte des Lichtempfangssignals zu erhalten, und **dadurch gekennzeichnet, dass** die Breite des von dem Emitter (608) emittierten Lichtemissionsimpulses derart konfiguriert ist, dass von einer Entfernungsauflösung der ersten Entfernungsinformationen und einer Entfernungsauflösung der zweiten Entfernungsinformationen die Entfernungsauflösung der zweiten Entfernungsinformationen um einen Abstand, der kürzer ist als ein vorbestimmter Abstand, dichter ist als die Entfernungsauflösung der ersten Entfernungsinformationen.

12. Fahrzeuginterne Vorrichtung zum Einbau in ein Fahrzeug, wobei die fahrzeuginterne Vorrichtung umfasst:
das Entfernungsmessungssystem (100) nach Anspruch 1, und wobei
der Bildprozessor (120) eine Tiefenkarte erzeugt, in der Entfernungswerte den Pixeln des erfassten Bildes zugeordnet sind, um die Tiefenkarte an eine Steuereinheit des Fahrzeugs auszugeben.

13. Fahrzeug, umfassend:
das Entfernungsmessungssystem (100) nach Anspruch 1; und
eine Steuereinheit, die konfiguriert ist, das Fahrzeug unter Verwendung einer Tiefenkarte zu steuern, in der Entfernungswerte Pixeln eines erfassten Bildes zugeordnet sind.

## Revendications

1. Système de télémétrie (100), comprenant :
une unité d'acquisition d'informations télémétriques (110) configurée pour détecter des premières informations télémétriques par mode TOF, temps de vol ;
un processeur d'image (120) configuré pour intégrer les premières informations télémétriques avec des secondes informations télémétriques, les secondes informations télémétriques étant obtenues par l'intermédiaire de traitement d'image d'une pluralité d'images stéréo capturées par une pluralité d'unités imagerie (11, 12) ;
un émetteur (608) configuré pour émettre une impulsion d'émission de lumière ; et
un récepteur (605, 606, 610) configuré pour détecter un signal de réception de lumière obtenu en conséquence du fait que l'impulsion d'émission de lumière est réfléchie à partir d'un objet, dans lequel
une largeur de l'impulsion d'émission de lumière émise par l'émetteur (608) et une période d'échantillonnage durant laquelle le récepteur (605, 606, 610) échantillonne le signal de réception de lumière sont configurées de telle sorte que la largeur de l'impulsion d'émission de lumière émise par l'émetteur (608) corresponde à un temps égal à un temps, ou plus long que celui-ci, nécessaire pour obtenir au moins un ou plusieurs échantillons du signal de réception de lumière, et **caractérisé en ce que** la largeur de l'impulsion d'émission de lumière émise par l'émetteur (608) est configurée de telle sorte que, d'une résolution télémétrique des premières informations télémétriques et d'une résolution télémétrique des secondes informations télémétriques, la résolution télémétrique des secondes informations télémétriques soit plus dense que la résolution télémétrique des premières informations télémétriques, à une distance plus courte qu'une distance prédéterminée.

2. Système de télémétrie (100) selon la revendication 1, dans lequel
une période d'échantillonnage durant laquelle le récepteur (605, 606, 610) échantillonne le signal de réception de lumière est configurée de telle sorte que trois, ou plus, échantillons du signal de réception de lumière soient obtenus par rapport à la largeur de l'impulsion d'émission de lumière.

3. Système de télémétrie (100) selon la revendication 1, dans lequel
la période d'échantillonnage est configurée de telle sorte qu'une résolution télémétrique des premières informations télémétriques soit de trois mètres.

4. Système de télémétrie (100) selon l'une quelconque des revendications 1 à 3, dans lequel
l'unité d'acquisition d'informations télémétriques (110) est configurée pour acquérir un signal de réception de lumière par rapport au temps et convertir le signal de réception de lumière en un signal de réception de lumière par rapport à la distance, et envoyer en sortie le signal de réception de lumière par rapport à la distance au processeur d'image (120),
le processeur d'image (120) convertit le signal de réception de lumière par rapport à la distance en une première fonction de coût qui diminue au fur et à mesure qu'une valeur du signal de réception de lumière augmente, et ensuite intègre la première fonction de coût avec une fonction de coût d'appariement stéréo qui est obtenue par le traitement d'image, ou
le processeur d'image convertit une fonction de coût d'appariement stéréo obtenue par le traitement d'image en une seconde fonction de coût qui augmente au fur et à mesure qu'une valeur de la fonction de coût d'appariement stéréo diminue, et ensuite intègre la seconde fonction de coût avec le signal de réception de lumière par rapport à une distance envoyé en sortie par l'unité d'acquisition d'informations télémétriques (110).

5. Système de télémétrie (100) selon la revendication 4, dans lequel
le processeur d'image interpole la fonction de coût d'appariement stéréo à un intervalle correspondant à une résolution télémétrique déterminée par la période d'échantillonnage, et
intègre la fonction de coût d'appariement stéréo interpolée avec la première fonction de coût qui est convertie afin de diminuer au fur et à mesure qu'une valeur du signal de réception de lumière correspondant par rapport à la distance augmente.

6. Système de télémétrie (100) selon la revendication 4, dans lequel
le processeur d'image interpole la fonction de coût d'appariement stéréo à un intervalle, dans lequel l'intervalle d'interpolation est différent pour des distances auxquelles une résolution télémétrique du processeur d'image est inférieure à une résolution télémétrique de l'unité d'acquisition d'informations télémétriques, des distances auxquelles une résolution télémétrique du processeur d'image est supérieure à une résolution télémétrique de l'unité d'acquisition d'informations télémétriques, et
intègre la fonction de coût d'appariement stéréo interpolée avec la première fonction de coût qui est convertie afin de diminuer au fur et à mesure qu'une valeur du signal de réception de lumière correspondant par rapport à la distance augmente.

7. Système de télémétrie (100) selon la revendication 4, dans lequel
le processeur d'image interpole la fonction de coût d'appariement stéréo à un intervalle, dans lequel l'intervalle d'interpolation correspond à une résolution du processeur d'image pour des distances inférieures à une valeur de seuil et l'intervalle d'interpolation correspond à une résolution de l'unité d'acquisition d'informations télémétriques pour des distances égales ou supérieures à la valeur de seuil, et
intègre la fonction de coût d'appariement stéréo interpolée avec la première fonction de coût qui est convertie afin de diminuer au fur et à mesure qu'une valeur du signal de réception de lumière correspondant par rapport à la distance augmente.

8. Système de télémétrie (100) selon l'une quelconque des revendications 1 à 5, dans lequel
l'unité d'acquisition d'informations télémétriques et le processeur d'image ayant la pluralité d'unités imagerie sont logés dans un logement, et l'unité d'acquisition d'informations télémétriques est disposée entre la pluralité d'unités imagerie.

9. Système de télémétrie (100) selon la revendication 8, dans lequel
une longueur de la pluralité d'unités imagerie et de l'unité d'acquisition d'informations télémétriques disposées dans une ligne droite est supérieure à une longueur de l'unité d'acquisition d'informations télémétriques et est sensiblement égale ou inférieure à 30 cm.

10. Système de télémétrie (100) selon la revendication 8 ou 9, dans lequel
une longueur de la pluralité d'unités imagerie et de l'unité d'acquisition d'informations télémétriques disposées dans une ligne droite est sensiblement égale ou supérieure à 8 cm et est sensiblement égale ou inférieure à 30 cm.

11. Procédé de télémétrie réalisé par un système de télémétrie (100), le système de télémétrie (100) incluant une unité d'acquisition d'informations télémétriques (110) configurée pour détecter des premières informations télémétriques par mode TOF, temps de vol ; et un processeur d'image (120) configuré pour intégrer les premières informations télémétriques avec des secondes informations télémétriques, les secondes informations télémétriques étant obtenues par l'intermédiaire de traitement d'image d'une pluralité d'images stéréo capturées par une pluralité d'unités imagerie (11, 12), le procédé de télémétrie comprenant :
l'émission, par un émetteur, d'une impulsion d'émission de lumière ; et
la détection, par un récepteur, d'un signal de réception de lumière obtenu en conséquence du fait que l'impulsion d'émission de lumière est réfléchie à partir d'un objet, dans lequel
lorsqu'une largeur de l'impulsion d'émission de lumière émise par l'émetteur (608) et une période d'échantillonnage durant laquelle le récepteur (605, 606, 610) échantillonne le signal de réception de lumière sont configurées de telle sorte que la largeur de l'impulsion d'émission de lumière émise par l'émetteur (608) corresponde à un temps égal à un temps, ou plus long que celui-ci, nécessaire pour obtenir au moins un ou plusieurs échantillons du signal de réception de lumière, et **caractérisé en ce que** la largeur de l'impulsion d'émission de lumière émise par l'émetteur (608) est configurée de telle sorte que, d'une résolution télémétrique des premières informations télémétriques et d'une résolution télémétrique des secondes informations télémétriques, la résolution télémétrique des secondes informations télémétriques soit plus dense que la résolution télémétrique des premières informations télémétriques, à une distance plus courte d'une distance prédéterminée.

12. Dispositif embarqué sur véhicule destiné à être installé dans un véhicule, le dispositif embarqué sur véhicule comprenant :
le système de télémétrie (100) de la revendication 1, et dans lequel
le processeur d'image (120) génère une carte de profondeur dans laquelle des valeurs télémétriques sont associées à des pixels de l'image capturée pour envoyer en sortie la carte de profondeur à une unité de commande du véhicule.

13. Véhicule, comprenant :
le système de télémétrie (100) de la revendication 1 ; et
une unité de commande configurée pour commander le véhicule en utilisant une carte de profondeur dans laquelle des valeurs télémétriques sont associées à des pixels d'une image capturée.
